(19) **Europäisches Patentamt / European Patent Office / Office européen des brevets**

(11) **EP 3 827 273 B1**

(12) **FASCICULE DE BREVET EUROPEEN**

(45) Date de publication et mention de la délivrance du brevet:
**08.06.2022 Bulletin 2022/23**

(21) Numéro de dépôt: **19759651.3**

(22) Date de dépôt: **25.07.2019**

(51) Classification Internationale des Brevets (IPC):
**G01S 1/04** *(2006.01)*     **G01S 5/02** *(2010.01)*

(52) Classification Coopérative des Brevets (CPC):
**G01S 1/0428; G01S 5/02; G01S 5/0278**

(86) Numéro de dépôt international:
**PCT/FR2019/051846**

(87) Numéro de publication internationale:
**WO 2020/021207 (30.01.2020 Gazette 2020/05)**

(54) **MÉTHODES ET SYSTÈMES DE RADIOGUIDAGE EN ENVIRONNEMENTS NON COOPERATIFS**

VERFAHREN UND SYSTEME ZUR POSITIONS- UND FUNKFÜHRUNG IN NICHT-KOOPERATIVEN UMGEBUNGEN

RADIO GUIDANCE METHODS AND SYSTEMS IN NON-COOPERATIVE ENVIRONMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2018 FR 1856975**

(43) Date de publication de la demande:
**02.06.2021 Bulletin 2021/22**

(73) Titulaire: **Coyote System**
**92150 Suresnes (FR)**

(72) Inventeurs:
- **PHILIPPE, Fabien**
**73100 Tresserve (FR)**
- **CHAMBON, Luc**
**94430 Chennevières-sur-Marne (FR)**

(74) Mandataire: **Demulsant, Xavier**
**Dejade & Biset**
**8 Avenue Jean Bart**
**95000 Cergy (FR)**

(56) Documents cités:
**US-A- 3 946 387     US-A1- 2009 259 432**
**US-A1- 2017 294 964**

**EP 3 827 273 B1**

**Description**

La présente invention a trait au domaine technique des méthodes et systèmes de détection de proximité d'un émetteur radio cible, et plus particulièrement à la localisation et au radioguidage vers cet émetteur radio cible.

On connaît un certain nombre de procédés et de systèmes permettant de localiser un objet connecté cible et de guider un utilisateur pourvu d'un équipement utilisateur depuis sa position actuelle vers cet objet connecté cible.

On peut classer ces solutions dans deux grandes catégories.

La première concerne les solutions basées sur une infrastructure et des équipements dédiés à la localisation : géolocalisation par satellites (de type GPS, GLONASS, GALILEO, ou BeiDou), géolocalisation terrestre (au moyen d'un réseau de capteurs et/ou un réseau cellulaire de téléphonie mobile et/ou des points d'accès d'un réseau sans fil local), ou une combinaison de ces deux dernières. La localisation de l'objet connecté et de l'équipement utilisateur est obtenue séparément à partir de leurs échanges respectifs avec l'infrastructure déployée. En disposant des coordonnées spatiales de l'objet connecté cible ainsi que des siens, l'équipement utilisateur permet de renseigner à partir de sa position actuelle sur un chemin vers l'objet connecté.

Toutefois, un inconvénient majeur de ces solutions est qu'elles impliquent des coûts d'infrastructure importants afin de garantir une localisation simultanée de deux côtés qui s'opère au détriment de l'autonomie énergétique, tant de l'émetteur radio cible que de l'équipement utilisateur (si le calcul est en partie embarqué). En outre, ces solutions ne fonctionnent qu'en environnements coopératifs, c'est-à-dire dans le cas d'une propagation en vue directe et en absence de brouillage, qu'il s'agisse d'interférences ou de contre-mesures de personnes désireuses d'entraver la localisation.

Les techniques de la seconde catégorie utilisent des paramètres liés à propagation du signal radio émis par l'objet connecté et reçu par l'équipement utilisateur. Ces paramètres, déterminés à partir du signal reçu, comportent une information fonction de la disposition spatiale de l'équipement utilisateur par rapport à l'objet connecté, permettant de détecter la proximité ou l'éloignement de ce dernier, et éventuellement le localiser. Ces techniques ont pour avantages, d'une part, de se passer de moyens coûteux en ressources et en énergie et de toute autre ressource pour être mises en oeuvre et, d'autre part, de permettre une localisation en environnement intérieur comme en environnement extérieur.

Parmi ces paramètres, on cite la puissance du signal reçu (couramment désigné par « RSS » pour *Received Signal Strength,* ou le niveau de puissance du signal reçu désigné par « RSSI » pour RSS Indicator), ou le rapport signal sur bruit, généralement désigné par l'abréviation SNR du terme anglais Signal-to-Noise Ratio.

La puissance du signal reçu, exprimée en décibels par rapport à un milliwatt (dBm), est la puissance du signal mesurée par l'équipement utilisateur. Le RSSI est une indication du niveau de puissance du signal reçu sur une échelle prédéfinie allant d'une première valeur (pas de signal) à une deuxième valeur supérieure (signal maximal). Les valeurs du RSSI sont généralement fournies par la couche Radio de l'équipement utilisateur et sont comprises entre zéro (pas de signal) et une valeur maximale non nulle du RSSI (signal maximal).

La variation de la puissance du signal reçu est fonction, selon un modèle prédéfini propre à l'environnement de propagation, de la distance parcourue par l'onde électromagnétique et des différents obstacles qu'elle a rencontrés. Par exemple, en espace libre, le modèle de Friis indique que la puissance du signal décroit en fonction du carré de la distance vis-à-vis de l'émetteur.

La puissance du signal reçu comporte ainsi un indicateur de la distance séparant l'équipement utilisateur de l'objet connecté, de sorte qu'elle peut être utilisée pour détecter la proximité ou l'éloignement de l'objet connecté. Il est, en effet, généralement admis qu'un RSS croissant en fonction de la distance signifie que l'on se rapproche de l'objet connecté cible, tandis qu'un RSS décroissant en fonction de la distance signifie que l'on s'éloigne de l'objet connecté cible.

La variation de la puissance du signal reçu en fonction de la distance peut, ainsi, être utilisée pour en déduire une orientation/direction dans laquelle se trouverait la source du signal radio reçu. Schématiquement, la source du signal se trouverait dans la direction de déplacement lorsque le RSS croît, et dans le sens opposé dans le cas contraire. Un tel procédé est décrit dans US 3 946387.

En outre, en se basant sur un modèle prédéfini de propagation du signal reçu, une distance entre l'objet connecté cible et l'équipement utilisateur peut être estimée à partir de la puissance du signal reçu. L'estimation de cette distance à partir de la puissance du signal reçu à différentes positions permet, par trilatération, une localisation approximative de l'objet connecté cible supposé statique.

Cependant, à cause des fluctuations incontrôlables inhérentes au canal de propagation, il est difficile d'établir une relation simple et précise entre la puissance du signal reçu et la distance. Ces fluctuations comprennent des évanouissements, liés aux obstacles mobiles, aux signaux parasites, aux fluctuations du bruit de fond, et surtout aux phénomènes de propagation multi-trajets, de diffraction, de réfraction, et de réflexion par le milieu traversé.

De surcroît, la superposition dans le monde réel de ces différentes causes difficilement mesurables augmente les fluctuations de la puissance du signal reçu et altère, par conséquent, la pertinence du RSS (ou du RSSI) pour le radioguidage vers la source du signal reçu.

L'utilisation de la puissance du signal reçu pour la localisation et/ou le guidage vers l'objet connecté cible se trouve, par conséquent, non pertinente, en dépit de sa mise en oeuvre relativement simple.

Quant au paramètre SNR, il quantifie la mesure dans laquelle un signal est affecté par le bruit. Le rapport signal sur bruit est défini par le rapport des puissances entre le signal reçu et le bruit mesuré en l'absence de ce signal. Les valeurs du SNR sont généralement fournies par la couche Radio de l'équipement utilisateur et sont le plus souvent comprises entre deux valeurs, à savoir une borne inférieure désignant un signal noyé dans le bruit, soit parce que le signal est faible, soit parce que le bruit est fort, et une borne supérieure désignant un signal émergeant nettement au-dessus du bruit.

Vu la relation inversement proportionnelle entre le rapport signal sur bruit (SNR) et la distance parcourue, à cause entre autres de l'affaiblissement sur le trajet du signal émis, le paramètre SNR comporte une information concernant la distance séparant l'équipement utilisateur de l'objet connecté cible source du signal émis.

Ainsi, compte tenu de sa dépendance spatiale, le SNR est utilisé à des fins de localisation en environnement intérieur comprenant un réseau local sans fil (WLAN). La pertinence d'un tel paramètre est liée au niveau de la puissance d'émission, au détriment de l'énergie dépensée par l'objet connecté cible.

Par ailleurs, le document Borenovic et al. (« Comparative analysis of RSSI, SNR and Noise level parameters applicability for WLAN positioning purposes », Borenovic, M.N., Neskovic, A.M., EUROCON 2009, DOI : 10.1109/EURCON.2009.5167905) présente une analyse expérimentale de l'intérêt de l'utilisation du RSSI seul, du SNR seul et du RSSI ensemble avec le SNR, par une méthode de localisation basée sur des réseaux de neurones formels, dans un environnement couvert par un réseau local sans fil. La méthode de localisation est, dans ce document, basée sur l'enregistrement préalable de l'empreinte radio (dite, en anglais, « *fingerprint* ») du signal émis dans l'environnement de localisation caractérisé au préalable.

En plus de ce qui précède, un inconvénient des méthodes et systèmes connus est qu'ils sont dans la majorité destinés à des configurations où le récepteur et l'émetteur radio à localiser se trouvent dans un même environnement, de type intérieur ou extérieur. Il est cependant fréquent qu'ils soient dans deux environnements différents, de type semi-intérieur ou semi-extérieur (l'un dans un environnement intérieur et l'autre dans un environnement extérieur). En effet, la position d'un objet connecté cible ne peut, a priori, qu'être inconnue au préalable pour l'équipement utilisateur chargé de le localiser et guider l'utilisateur vers la position de cet objet. L'objet connecté cible à localiser peut, de ce fait, être, par exemple, dans un environnement intérieur ou confiné (par exemple, un garage, un parking sous-sol ou un appartement à un étage supérieur), alors que l'équipement utilisateur est dans un environnement extérieur (par exemple, dans une rue dans un environnement suburbain, urbain, urbain dense, périurbain, ou rural), ou l'inverse.

Un objet de la présente invention est de proposer des méthodes et systèmes de positionnement/localisation basés sur la détection de proximité.

Un autre objet de la présente invention est de proposer des méthodes et systèmes pour la détection de proximité d'un objet connecté cible basés sur la combinaison de deux paramètres/métriques déterminés à partir du signal reçu.

Un autre objet de la présente invention est d'atténuer l'impact de la propagation par trajets multiples sur la pertinence des paramètres estimés à partir du signal reçu, pour le positionnement et/ou pour le radioguidage vers la source du signal reçu.

Un autre objet de la présente invention est d'améliorer la stabilité de la précision dans le radioguidage vers la source du signal reçu basé sur la puissance du signal reçu.

Un autre objet de la présente invention est d'améliorer la précision de la localisation, dans différents types environnements, d'un objet connecté cible.

Un autre objet de la présente invention est de proposer un équipement utilisateur apte à guider/orienter l'utilisateur depuis sa position actuelle dans un environnement extérieur, vers un objet connecté cible disposé dans un environnement intérieur.

Un autre objet de la présente invention est de réduire la marge d'erreur des méthodes et systèmes de radioguidage et de localisation basés sur la métrique du RSSI.

Un autre objet de la présente invention est de proposer une combinaison de métriques à l'effet d'une meilleure estimation de la distance ou, plus généralement, de la proximité, d'un récepteur radio mobile d'un émetteur radio cible.

Un autre objet de la présente invention est de proposer une combinaison de métriques à l'effet d'une meilleure appréciation du taux de variation de cette combinaison que celle du taux de variation de chaque métrique prise séparément.

Un autre objet de la présente invention est de proposer des méthodes et des systèmes de radioguidage et de localisation basés sur des mesures du niveau de puissance du signal reçu (RSSI) et du SNR.

A cet effet, il est proposé, en premier lieu, une méthode de radioguidage vers un émetteur radio à partir de signaux émis par cet émetteur radio et reçus par un équipement utilisateur, cette méthode comprenant les étapes suivantes :

- émission successive, depuis une position cible, par l'émetteur radio d'une pluralité de signaux intégrant :

  ○ un premier signal modulé par une première modulation, ce premier signal étant émis avec une première puissance d'émission ;

◦ un deuxième signal modulé par une deuxième modulation différente de la première modulation, ce deuxième signal étant émis avec une deuxième puissance d'émission ;

- déplacement de l'équipement utilisateur en une pluralité de positions par rapport à l'émetteur radio ;
- a chaque position de ladite pluralité de positions,

◦ mesure, par l'équipement utilisateur, du niveau de puissance du signal reçu et du rapport signal sur bruit relatifs à chaque signal émis de ladite pluralité de signaux, le niveau de puissance du signal émis variant dans un intervalle prédéfini ;
◦ normalisation dans un autre intervalle prédéfini de chacun des niveaux de puissance et des rapports signal sur bruit mesurés ;
◦ calcul d'une première valeur statistique des niveaux de puissance normalisés;
◦ calcul d'une deuxième valeur statistique des rapports signal sur bruit normalisés;
◦ calcul d'un indice de proximité de l'émetteur radio, cet indice de proximité étant égal à la somme d'une première fonction algébrique de la première valeur statistique et d'une deuxième fonction algébrique de la deuxième valeur statistique, la première fonction et la deuxième fonction étant, respectivement, pondérées par un premier coefficient de pondération non nul prédéfini et par un deuxième coefficient de pondération non nul prédéfini, la somme du premier coefficient de pondération et du deuxième coefficient de pondération étant sensiblement égale à un ;

- détermination, à une position de ladite pluralité de positions, d'un vecteur gradient de l'indice de proximité calculé auxdites pluralités de positions ce vecteur gradient pointant, à partir de ladite position, vers les zones de croissance, en fonction de la distance entre l'équipement utilisateur et l'émetteur radio, de l'indice de proximité.

Diverses caractéristiques supplémentaires peuvent être prévues, seules ou en combinaison :

- la méthode de radioguidage comprend, en outre, une étape de détermination des coordonnées, dans un système de coordonnées prédéfini, de chaque position de ladite pluralité de positions ;
- la méthode de radioguidage comprend, en outre, une étape de détermination d'un premier vecteur de déplacement de l'équipement utilisateur liant une première position et une deuxième position de ladite pluralité de positions ;
- la méthode de radioguidage comprend, en outre, les étapes suivantes

o détermination d'un deuxième vecteur de déplacement de l'équipement utilisateur liant la première position et une troisième position de ladite pluralité de positions ;
◦ calcul de l'indice de proximité à la première position, à la deuxième position et à la troisième position,

- la méthode de radioguidage comprend, en outre, une étape d'affichage du vecteur gradient déterminé à une première position et du vecteur de déplacement déterminé liant cette première position et la deuxième position ;
- la méthode de radioguidage comprend, en outre, une étape de calcul de la norme du vecteur gradient de l'indice de proximité.
- la méthode de radioguidage comprend, en outre, une étape de calcul, à partir de l'indice de proximité, d'une distance séparant la position cible d'une position de ladite pluralité de positions, selon la formule suivante $log_{10}(D) = \frac{1}{log_{10}(2,2*k)} * log_{10}\left(\frac{2,2*k}{i}\right)$ où **k** est un coefficient prédéfini, D est la distance à calculer, et i est l'indice de proximité calculé à ladite position de ladite pluralité de positions ;
- la méthode de radioguidage comprend en outre une étape de localisation de l'émetteur radio intégrant :

o une itération, au moins trois fois, de l'étape de calcul d'une distance séparant la position cible d'une position de ladite pluralité de positions de sorte à avoir une première distance séparant la position cible d'une première position, une deuxième distance séparant la position cible d'une deuxième position, et une troisième distance séparant la position cible d'une troisième position;
◦ une estimation, par trilatération, de la position cible au moyen de la première distance, la deuxième distance et la troisième distance.

Il est proposé, en deuxième lieu, un système de radioguidage comprenant

- un émetteur radio apte à émettre une pluralité de signaux intégrant :

  ◦ un premier signal modulé par une première modulation;
  ◦ un deuxième signal modulé par une deuxième modulation différente de la première modulation;

  la modulation et/ou la puissance d'émission d'au moins un signal de ladite pluralité de signaux étant configurable à distance ;
- un équipement utilisateur déplaçable en une pluralité de positions par rapport à l'émetteur radio, cet équipement utilisateur étant apte, à chaque position de ladite pluralité de positions,

  ◦ à mesurer le niveau de puissance du signal reçu et le rapport signal sur bruit relatifs à chaque signal émis de ladite pluralité de signaux, le niveau de puissance du signal émis variant dans un intervalle prédéfini ;
  ◦ à normaliser, dans un autre intervalle prédéfini, chacun des niveaux de puissance et des rapports signal sur bruit mesurés ;
  ◦ à calculer une première valeur statistique des niveaux de puissance normalisés;
  ◦ à calculer une deuxième valeur statistique des rapports signal sur bruit normalisés;
  ◦ à calculer un indice de proximité de l'émetteur radio, cet indice de proximité étant égal à la somme d'une première fonction algébrique de la première valeur statistique et d'une deuxième fonction algébrique de la deuxième valeur statistique, la première fonction et la deuxième fonction étant, respectivement, pondérées par un premier coefficient de pondération non nul prédéfini et par un deuxième coefficient de pondération non nul prédéfini, la somme du premier coefficient de pondération et du deuxième coefficient de pondération étant sensiblement égale à un ;

  cet équipement utilisateur étant, en outre, apte à déterminer, à une position de ladite pluralité de positions, un vecteur gradient de l'indice de proximité calculé auxdites pluralité de positions, ce vecteur gradient pointant, à partir de ladite position, vers les zones de croissance, en fonction de la distance entre l'équipement utilisateur et l'émetteur radio, de l'indice de proximité.

Il est proposé, en troisième lieu, un produit programme d'ordinateur implémenté sur un support mémoire, susceptible d'être mis en oeuvre au sein d'une unité de traitement informatique et comprenant des instructions pour la mise en oeuvre de l'une des méthodes présentées ci-dessus de radioguidage.

D'autres caractéristiques et avantages de l'invention apparaîtront plus clairement et de manière concrète à la lecture de la description ci-après de modes de réalisation, laquelle est faite en référence aux dessins annexés dans lesquels :

- la figure 1 illustre schématiquement un utilisateur pourvu d'un équipement utilisateur configuré, selon divers modes de réalisation, pour détecter la proximité d'un émetteur radio, radioguider l'utilisateur vers cet émetteur radio et estimer la position de cet émetteur radio ;
- la figure 2 illustre schématiquement le séquencement dans le temps d'une pluralité de signaux émis par l'émetteur radio, selon divers modes de réalisation ;
- la figure 3 affiche deux courbes illustrant la variation en fonction de la distance à l'émetteur radio cible du niveau de puissance (RSSI) normalisé, respectivement, d'un premier signal reçu et d'un deuxième signal reçu, selon divers modes de réalisation ;
- la figure 4 affiche deux courbes illustrant la variation en fonction de la distance à l'émetteur radio cible du rapport signal sur bruit normalisé et du niveau de puissance normalisé d'un même signal reçu, selon divers modes de réalisation ;
- la figure 5 affiche des courbes illustrant la variation en fonction de la distance à l'émetteur radio cible d'un indice de proximité, de la valeur maximale d'une pluralité de niveaux de puissance normalisés de signaux reçus, et de la valeur maximale d'une pluralité de SNR normalisés relatives à des signaux reçus, selon divers modes de réalisation ;
- la figure 6 illustre schématiquement le déplacement de l'équipement utilisateur en une pluralité de positions et la détermination, selon divers mode de réalisation, à ces positions d'une orientation permettant de guider vers l'émetteur radio ;
- la figure 7 illustre schématiquement le déplacement de l'équipement utilisateur en une pluralité de positions et la détermination, selon divers mode de réalisation, à ces positions de la valeur d'une jauge permettant de guider vers l'émetteur radio ;
- la figure 8 illustre schématiquement le déplacement de l'équipement utilisateur en une pluralité de positions et la localisation approximative, basée sur l'indice de proximité calculé à ces positions, de l'émetteur radio ;

- la figure 9 illustre schématiquement des étapes d'un procédé de détection de proximité, de radioguidage et de localisation d'un émetteur radio cible, selon divers modes de réalisation.

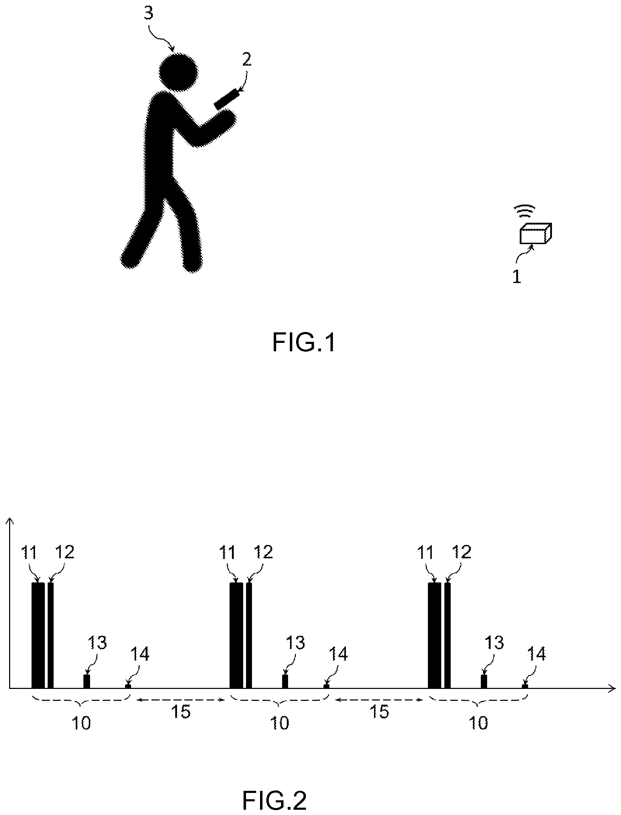

En se référant à la figure 1, il est affiché un émetteur radio 1. Cet émetteur radio 1 est apte à émettre un signal modulé par une modulation prédéfinie. Le type et/ou les paramètres de cette modulation sont, dans un mode de réalisation, configurables à distance.

Cette modulation peut être de différents types telle qu'une modulation d'amplitude, une modulation de fréquence, une modulation de phase, une modulation par saut d'amplitude, une modulation par saut de fréquence, une modulation par saut de phase, une modulation à étalement de spectre, une modulation multi-porteuse, ou une combinaison de ces modulations.

Les paramètres d'une modulation comprennent, en fonction du type de cette modulation, par exemples, la fréquence porteuse, le facteur d'étalement de spectre, la largeur de bande, le nombre des sous-porteuses.

La modulation utilisée par l'émetteur radio 1 est, dans un mode de réalisation, une modulation à étalement de spectre d'un facteur prédéfini. Le facteur d'étalement du signal émis est, dans un mode de réalisation, configurable à distance.

Un signal à étalement de spectre peut être obtenu par différentes techniques, telles que par séquence directe, par sauts de fréquence, ou par saut dans le temps, par un balayage en fréquence, ou par une combinaison de ces techniques.

Dans un mode de réalisation, l'émetteur radio 1 met en oeuvre une modulation à étalement de spectre à balayage de fréquence (dite, en anglais, CSS pour « Chirp Spread Spectrum »). Une modulation à étalement de spectre à balayage de fréquence (CSS) est, relativement, peu coûteuse en termes d'énergie, favorise une bonne pénétration du signal modulé dans les environnements intérieurs notamment les bâtiments, et renforce l'immunité du signal modulé à l'effet Doppler (c.à.d. aux vitesses relatives) et à l'atténuation par propagation multi-trajets.

Le principe de l'étalement de spectre, quelle que soit la technique utilisée, est que le signal de sortie modulé occupe une largeur de bande d'émission bien plus importante que ne le requiert la largeur de bande des informations en bande de base. Le spectre du signal informatif en bande de base est ainsi élargi au spectre du signal étalé sur une plus grande largeur de bande que celle strictement nécessaire. On définit alors le facteur d'étalement (désigné en anglais par « *Spreading Factor* ») comme le rapport des largeurs de bande du signal après et avant l'étalement.

L'émetteur radio 1 est, également, apte à émettre successivement une pluralité de signaux distincts, à des intervalles de temps prédéfinis et avec des puissances d'émission respectives prédéfinies. La puissance d'émission du signal émis est, dans un mode de réalisation, configurable à distance. De même, l'intervalle de temps entre deux émissions successives est, dans un mode de réalisation, configurable à distance.

L'émetteur radio 1 est apte à émettre de façon périodique dans le temps une séquence 10 (ou une série) de signaux 11-14. La période 15 de temps entre deux émissions successives d'une séquence 10 de signaux 11-14 est, dans un mode de réalisation, configurable à distance.

La séquence 10 de signaux est répétée un certain temps, qui est plafonné par le taux d'occupation de la bande. La bande de fréquences de l'émetteur radio 1 est l'une quelconque des standards de communications sans fil (par exemple Wifi, Zig Bee, Bluetooth, standards de téléphonie mobile) ou l'une quelconque des « bandes libres ».

Le nombre des signaux 11-14 compris dans une même séquence 10 ainsi que les paramètres de chacun de ces signaux 11-14 (bande de fréquence, type et paramètres de la modulation telle qu'une modulation à étalement de spectre définie par un facteur d'étalement, puissance, contenu) sont, dans un mode de réalisation, configurables à distance. Plus généralement, le contenu d'une séquence 10 de signaux 11-14, ainsi que sa durée et sa fréquence de récurrence sont configurables à distance. L'émetteur radio 1 adapte, sur requête, ses émissions. Le nombre, l'ordre, la durée, et le niveau de la puissance d'émission des signaux 11-14 indiqués sur la figure 2 ne sont donc donnés qu'à titre illustratif.

La séquence 10 de signaux 11-14 comprend des signaux 11-14 dont les puissances d'émission respectives sont différentes.

En variante ou en combinaison, la séquence 10 de signaux 11-14 comprend une pluralité de signaux 11-14 étalés (c.à.d. à étalement de spectre) dont les facteurs d'étalement respectifs sont différents.

Plus généralement, la pluralité de signaux 11-14 comprend au moins deux signaux modulés par deux modulations différentes (de type différent ou de même type mais de paramètres différents), et émis avec deux puissances d'émission respectives différentes.

Dans un mode réalisation, la pluralité de signaux 11-14 comprend au moins deux signaux à étalement de spectre avec deux facteurs d'étalement respectifs différents, et émis avec deux puissances d'émission respectives différentes.

Dans un mode de réalisation, la séquence 10 de signaux 11-14 comprend :

- un premier signal 11 à étalement de spectre avec un premier facteur d'étalement ou, plus généralement, modulé par une première modulation et émis avec une première puissance d'émission ;

- un deuxième signal **12** à étalement de spectre avec un deuxième facteur d'étalement ou, plus généralement, modulé par une deuxième modulation et émis avec une deuxième puissance d'émission ;
- un troisième signal **13** à étalement de spectre avec un troisième facteur d'étalement ou, plus généralement, modulé par une troisième modulation et émis avec une troisième puissance d'émission ;
- un quatrième signal **14** à étalement de spectre avec un quatrième facteur d'étalement ou, plus généralement, modulé par une quatrième modulation et émis avec une quatrième puissance d'émission.

Le deuxième facteur d'étalement, le troisième facteur d'étalement et le quatrième facteur d'étalement sont sensiblement identiques. Le premier facteur d'étalement est différent des trois autres facteurs d'étalements. Les signaux **11-14** présentent ainsi une diversité en modulation.

Le premier facteur d'étalement est supérieur, respectivement, au deuxième facteur d'étalement, au troisième facteur d'étalement, et au quatrième facteur d'étalement de sorte que les signaux **11-14** émis présentent une diversité en modulation. Le deuxième facteur d'étalement, le troisième facteur d'étalement et le quatrième facteur d'étalement sont réduits, par rapport au premier facteur d'étalement.

Dans un mode de réalisation, le deuxième signal **12**, le troisième signal **13** et le quatrième signal **14** sont émis en bande étroite, c'est-à-dire sans étalement de spectre (seul le premier signal **11** étant étalé).

Dans un mode de réalisation, le premier facteur d'étalement est sensiblement le double de chacun des autres facteurs d'étalement, ces derniers étant sensiblement identiques.

La première puissance d'émission et la deuxième puissance d'émission sont, dans un mode de réalisation, identiques. Chacune de la troisième puissance d'émission et la quatrième puissance d'émission est inférieure à la première puissance d'émission.

Dans un mode de réalisation, la quatrième puissance d'émission est très faible par rapport à la première puissance d'émission. Les signaux **11-14** présente, ainsi, une diversité en puissance d'émission permettant de discriminer la position exacte de la cible si elle est invisible.

Dans un mode de réalisation, lorsque la modulation mise en œuvre par l'émetteur radio **1** est une modulation à étalement de spectre ou une autre, la première puissance d'émission, la deuxième puissance d'émission, la troisième puissance d'émission et la quatrième puissance d'émission sont, respectivement, de 25 mW (milliwatt), 25 mW, 3 mW et 0,5 mW.

Dans un mode de réalisation, la deuxième puissance d'émission et la troisième puissance d'émission sont choisies de sorte que la portée du deuxième signal **12** émis soit sensiblement le double de celle du troisième signal **13** émis.

Dans un mode de réalisation, le premier facteur d'étalement et le deuxième facteur d'étalement sont choisis de sorte que la portée du premier signal **11** émis soit supérieure de moitié à celle du deuxième signal **12** émis. Il en résulte que la résolution de la position est cinq fois plus fine en passant du premier signal **11** au quatrième signal **14** et atteint l'échelle métrique.

Plus généralement, la séquence **10** de signaux **11-14** comprend un signal **11** à étalement de spectre de facteur d'étalement différent (par exemple, plus important que) d'au moins un autre signal **12-14** et, éventuellement, au moins un signal **14** de puissance d'émission relativement différente d'au moins celle d'un autre signal **11-13** (par exemple, plus faible).

Avantageusement, la diversité en modulation (telle qu'une diversité en étalement de spectre) et la diversité en puissance d'émission que présentent les signaux **11-14** de la séquence **10** améliore la résistance de l'ensemble des signaux émis (c.à.d. dans leur ensemble) aux différentes causes d'évanouissement (propagation par trajets multiples, obstacles, interférence, bruit, ou brouillage par exemples), et convient aux besoins de discrimination côté réception.

Avantageusement, une diversité en modulation permet de combattre, entre autres, l'évanouissement à petite échelle causé par les trajets multiples.

Les signaux **11-14** émis successivement sont soumis à des conditions différentes par leurs caractéristiques propres, ainsi que par leur échelonnement (fréquences, type et paramètre(s) de modulation, puissance, contenu). A leur réception à des positions différentes, ces signaux **11-14** sont affectés à des degrés différents par les différentes causes d'évanouissement du canal de propagation, et produisent un résultat moyen où les effets néfastes (distorsion ou dégradation du signal) sont amortis. Ceci a, avantageusement, pour effet de réduire les fluctuations de la puissance du signal reçu et du rapport signal sur bruit, en fonction de la distance.

En se reportant de nouveau à la figure 1, un utilisateur **3** pourvu d'un équipement utilisateur **2** se trouve à la portée radio de l'émetteur radio **1**. L'exemple d'un utilisateur **3** humain se déplaçant à pied, tel qu'il est affiché par la figure 1, n'est en aucun cas limitatif dans le sens où cet utilisateur **3** pourvu de l'équipement utilisateur **2** peut être un utilisateur humain ou non (robot ou drone par exemples) et peut se déplacer par tout autre mode (véhicule, vélo, moto, bateau, ou avion par exemples).

L'équipement utilisateur **2** comprend, dans un mode de réalisation, un récepteur radio (ou, un émetteur-récepteur radio désigné dans la suite par récepteur radio), apte à capter et mesurer différents paramètres d'un signal radio reçu et une application informatique configurée pour traiter les paramètres mesurés.

L'équipement utilisateur **2** comprend, dans un mode réalisation, un téléphone intelligent (smartphone) intégrant une application informatique et un récepteur/émetteur radio de type Wifi, HiperLAN, Zig Bee, ou cellulaire (celui d'un réseau de communications mobiles). Le récepteur radio est, dans un mode de réalisation, un émetteur-récepteur à 868 MHz, 915 MHz, 2450 MHz, ou toute autre bande de fréquence également utilisée par l'émetteur radio **1**. Dans un mode de réalisation, ce récepteur radio est compris dans un module communicant (via Bluetooth, par exemple) avec ladite application informatique installée dans un téléphone intelligent ou dans tout autre terminal informatique (ordinateur portable, tablette ou phablette).

L'équipement utilisateur **2** est configuré pour détecter la proximité de l'émetteur radio **1**. L'équipement utilisateur **2** est, en outre, configuré pour orienter (ou guider) l'utilisateur **2** vers l'émetteur radio **1**. Dans un autre mode de réalisation, l'équipement utilisateur **2** permet, en outre, de localiser l'émetteur radio **1**. L'équipement utilisateur **2** est, dans un mode de réalisation, configuré pour fournir une information directionnelle permettant d'atteindre l'émetteur radio **1**.

Pour cela, l'équipement utilisateur **2** est apte à capter et mesurer le niveau de puissance du signal reçu RSSI (ou, d'une manière équivalente, le RSS à partir duquel un RSSI est déterminé) de chacun des signaux **11-14**. Le niveau de puissance mesuré du signal **11-14** reçu varie dans un intervalle prédéfini de type [RSSI_Min, RSSI_Max] où RSSI_Min désigne l'absence du signal **11-14** et RSSI_Max désigne un niveau de puissance maximal. Le niveau de puissance mesuré d'un signal **11-14** reçu à une distance prédéfini de l'émetteur radio 1 prend donc une valeur comprise dans cet intervalle prédéfini.

Dans un mode de réalisation, le niveau de puissance (RSSI) mesuré d'un signal **11-14** reçu à une certaine distance de l'émetteur radio 1 est normalisé (c.à.d., mis à l'échelle) dans l'intervalle [0, 1]. Pour ce faire, supposons que le niveau de puissance RSSI mesuré varie entre une valeur minimale RSSI_Min et une valeur maximale RSSI_Max, alors le niveau de puissance normalisé est donné par (RSSI_mesuré - RSSI_Min) / (RSSI_Max - RSSI_Min).

L'équipement utilisateur **2** est, en outre, configuré pour mesurer le rapport signal sur bruit relatif à chacun des signaux **11-14** reçu. Le rapport signal sur bruit SNR mesuré relatif à chacun des signaux **11-14** varie dans un intervalle prédéfini de type [SNR_Min, SNR_Max] où SNR_Min désigne un signal dont la puissance est peu différente de celle du bruit et SNR_Max désigne un signal dont la puissance contraste nettement avec celle du bruit. Le rapport signal sur bruit mesuré relatif à un signal **11-14** reçu à une certaine distance de l'émetteur radio **1** prend donc une valeur comprise dans cet intervalle prédéfini.

Dans un mode de réalisation, le rapport signal sur bruit SNR relatif à un signal **11-14** reçu à une certaine distance de l'émetteur radio **1** est normalisé (c.à.d., mis à l'échelle) dans l'intervalle [0, 1]. Pour ce faire, supposons que le rapport signal sur bruit SNR mesuré varie entre une valeur minimale SNR_Min et une valeur maximale SNR_Max, alors le rapport signal sur bruit normalisé est donné par (SNR_mesuré - SNR_Min) / (SNR_Max - SNR_Min).

Plus généralement, le niveau de puissance RSSI et le rapport signal sur bruit SNR relatifs à un signal **11-14** reçu à une certaine distance de l'émetteur radio **1** sont normalisés dans un même intervalle. Cet intervalle peut être l'intervalle [0, 1] ou tout autre intervalle. Les rapports signal sur bruit SNR mesurés et les niveaux de puissance RSSI mesurés sont, ainsi, ramenés sur un même intervalle (ou, échelle), par exemple l'intervalle [0,1].

Dans un mode de réalisation, les rapports signal sur bruit SNR et les niveaux de puissance RSSI d'un signal **11-14** reçu à des positions successives de l'émetteur radio **1** sont normalisés dans le même intervalle [0, 1].

La période **15** de temps entre deux séquences **10** successives (c.à.d., la fréquence de récurrence de la séquence **10**) est choisie en rapport avec la vitesse de déplacement de l'équipement utilisateur **2** (supposée être 1,5 mètre par seconde, lorsque l'utilisateur **3** se déplace à pied, 10 mètres par seconde lorsque l'utilisateur **3** se déplace en voiture, 35 mètres par seconde lorsque l'utilisateur **3** se déplace en aérien). Autrement dit, la période de temps entre deux émissions successives d'un même signal **11, 12, 13** ou **14** (ou, la fréquence de récurrence de l'émission de chacun des signaux **11-14**) est choisie en fonction de la vitesse de déplacement de l'équipement utilisateur **2**. Cette fréquence de récurrence d'émission est, dans un mode de réalisation, configurable à distance.

La durée d'une séquence **10** est définie en rapport avec la vitesse de déplacement de l'utilisateur **3**. Dans un mode de réalisation, la durée de la séquence **10** est de huit secondes lorsque l'utilisateur **3** se déplace à pied.

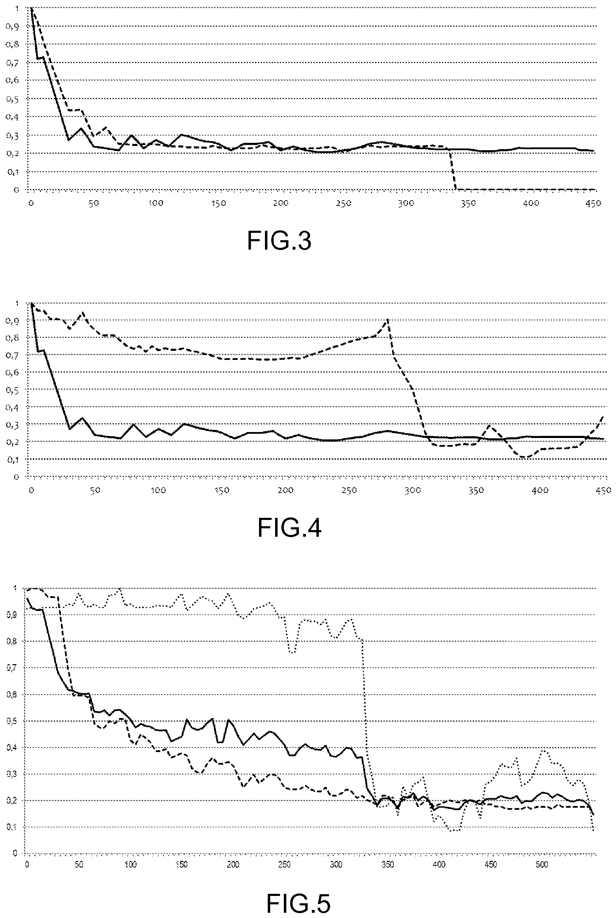

La courbe en trait plein de la figure 3 illustre la variation du niveau de puissance RSSI normalisé dans l'intervalle [0, 1] du premier signal **11** reçu, en fonction de la distance entre l'émetteur radio **1** et l'équipement utilisateur **2**. La courbe en trait discontinu de la figure 3 illustre la variation du niveau de puissance RSSI normalisé dans l'intervalle [0, 1] du deuxième signal **12** reçu, en fonction de la distance entre l'émetteur radio **1** et l'équipement utilisateur **2**.

La courbe en trait plein de la figure 4 illustre la variation du niveau de puissance RSSI normalisé dans l'intervalle [0, 1] du premier signal **11** reçu, en fonction de la distance entre l'émetteur radio 1 et l'équipement utilisateur **2**. La courbe en trait discontinu de la figure 4 illustre la variation du rapport signal sur bruit SNR normalisé dans l'intervalle [0, 1] relatif à ce même premier signal **11,** en fonction de la distance entre l'émetteur radio **1** et l'équipement utilisateur **2**.

Ces données sont obtenues en mesurant par l'équipement utilisateur **2,** à une pluralité de distances différentes de l'émetteur radio **1,** le niveau de puissance du signal reçu et le rapport signal sur bruit relatifs à chacun des signaux **11-14** émis par l'émetteur radio **1**.

Les niveaux de puissance du signal reçu (RSSI) mesurés à différentes distances de l'émetteur radio **1** sont, sur les figures 3 et 4, normalisés dans l'intervalle [0, 1], de sorte que le niveau de puissance maximal du signal reçu soit égal à l'unité. Pareillement, les valeurs du SNR mesurées à différentes distances de l'émetteur radio **1** sont normalisées dans l'intervalle [0, 1], de sorte que la valeur maximale du SNR soit égale à l'unité.

Dans un mode de réalisation, les valeurs des rapports signal sur bruit SNR normalisés relatives aux signaux **11-14** reçus sont lissées pour les valeurs inférieures à un seuil prédéfini. Ce seuil est par exemple de 0.25 (ce seuil n'étant pas appliqué à l'exemple de la figure 4).

L'équipement utilisateur **2** calcule une valeur statistique des niveaux de puissance normalisés des signaux **11-14** reçus, mesurées sensiblement à une même distance de l'émetteur radio **1** (c.à.d. sensiblement à une même position de l'équipement utilisateur **2** par rapport à l'émetteur radio **1**). De même, l'équipement utilisateur **2** calcule une valeur statistique des rapports signal sur bruit normalisés relatifs aux signaux **11-14** reçus, mesurés sensiblement à une même distance de l'émetteur radio (c.à.d. sensiblement à une même position de l'équipement utilisateur **2** par rapport à l'émetteur radio **1**).

La valeur statistique calculée peut être, par exemples, une valeur moyenne (arithmétique, géométrique, harmonique ou toute autre type de moyenne), la valeur médiane, la valeur maximale, la valeur minimale, une valeur moyenne pondérée (c.à.d. affecter des poids différents aux SNR et/ou au RSSI des signaux **11-14** reçus, la somme de ces poids étant égal à l'unité).

Dans un mode de réalisation, l'opérateur statistique (moyenne, maximum, minimum ou autre) utilisé pour calculer une valeur statistique des SNR et/ou des RSSI normalisés est choisi en fonction de la distance séparant l'équipement utilisateur **2** de l'émetteur radio **1** ou en fonction de l'indice de proximité, ce qui revient au même par la relation qui les unit, présentée ci-dessous. Par exemple, la valeur statistique est la valeur maximale lorsque cette distance est supérieure à une distance prédéfinie et, est la valeur minimale lorsque cette distance est inférieure à la distance prédéfinie. Dans un autre mode de réalisation, un opérateur statistique est utilisé par intervalle de distance. En d'autres termes, une première valeur statistique (par exemple, la valeur minimale) est calculée aux distances inférieures à une première distance seuil, une deuxième valeur statistique (par exemple, la moyenne) est calculée aux distances comprises entre la première distance seuil et une deuxième distance seuil supérieure à la première distance seuil, une troisième valeur statistique (par exemple, la valeur maximale) est calculée aux distances supérieures à la deuxième distance seuil.

En outre, à une ou plusieurs distances prédéfinies de l'émetteur radio **1**, l'opérateur statistique appliqué aux SNR peut être différent de celui appliqué aux RSSI. Par exemple, à chaque distance de l'émetteur radio **1**, la valeur maximale et la valeur moyenne peuvent être calculées, respectivement, pour les niveaux de puissance et les rapports signal sur bruit relatifs aux différents signaux **11-14** reçus à cette distance.

Dans un mode de réalisation, l'équipement utilisateur **2** calcule l'enveloppe (c.à.d. la valeur maximale) et applique toutes autres opérations (de filtrage, de pondération différemment les RSSI et/ou le SNR normalisés des signaux **11-14**) appliquées aux différentes valeurs normalisées du RSSI et du SNR relatifs aux différents signaux **11-14** reçus en une même (ou, sensiblement une même) position de l'équipement utilisateur **2** par rapport à l'émetteur radio **1**.

Tel qu'il est décrit ci-dessus, des mesures des RSSI et des SNR des différents signaux **11-14** à des positions successives de l'émetteur radio **1** sont d'abord normalisées dans un même intervalle, ensuite une opération statistique est appliquée aux RSSI normalisés et aux SNR normalisés mesurés en une même position. Cependant, ces deux étapes peuvent, bien entendu, être inversées dans le sens où l'opération statistique est d'abord effectuée sur les mesures, ensuite les valeurs statistiques obtenues sont normalisées dans l'intervalle [0, 1] .

Les courbes de la figure 5 illustrent la variation, en fonction de la distance, de la valeur maximale des niveaux de puissance normalisés dans l'intervalle [0, 1] des signaux **11-14** successivement reçus (courbe en trait discontinu), et de la valeur maximale des rapports signal sur bruit normalisés dans l'intervalle [0, 1] et lissés relatifs à ces signaux **11-14** (courbe en pointillé).

Tel qu'il est illustré par la figure 4, la variation en fonction de la distance du niveau de puissance normalisé du signal reçu et le rapport signal sur bruit normalisé se rapportent à deux fonctions de forme différente.

Chacune de ces deux fonctions de la puissance du signal reçu et du rapport signal sur bruit est une expression algébrique différente de la variable distance séparant l'équipement utilisateur **2** de l'émetteur radio **1** source du signal reçu de sorte que l'observation de ces deux paramètres du signal reçu permet d'améliorer la précision du radioguidage vers l'émetteur radio **1** et sa localisation.

Avantageusement, l'exploitation de ces deux fonctions ensemble permet d'avoir une meilleure estimation de la proximité de l'émetteur radio **1**, ou encore de la distance séparant l'équipement utilisateur **2** de l'émetteur radio **1**.

Une combinaison de ces deux fonctions peut donc être utilisée comme un indicateur de proximité de l'émetteur radio **1**, ou aussi comme un indicateur sur la distance séparant l'équipement utilisateur **2** de l'émetteur radio **1**.

Dans un mode de réalisation, la proximité de l'émetteur radio **1** est estimée en utilisant ensemble la variation en fonction de la distance, du niveau de puissance normalisé du signal reçu et la variation en fonction de la distance du rapport signal sur bruit normalisé.

A cet égard, la variation en fonction de la distance du rapport signal sur bruit (SNR) normalisé est, dans un mode de réalisation, approximée par un polynôme d'ordre élevé. La variation en fonction de la distance du niveau de puissance (RSSI) normalisé du signal reçu revêt, quant à elle, une forme quadratique (c.à.d. un polynôme d'ordre deux dont la représentation graphique est une parabole, ce qui est cohérent avec l'équation de transmission de Friis citée ci-dessus) jusqu'à vue directe à bout portant de l'émetteur radio **1.**

A titre d'exemple, le niveau de puissance du signal reçu en champ libre (dans le cas d'un radioguidage aérien par exemple) est, sur l'essentiel du chemin vers l'émetteur radio **1,** inversement proportionnelle approximativement au carré de la distance de la forme RSSI = k/(1+D$^2$) (k étant un coefficient lié à l'environnement et D désignant la distance). Cette approximation peut aussi être prépondérante dans la zone de discrimination aux environs de l'émetteur radio **1** source des signaux radio reçus. En environnement comportant des facteurs d'amortissement du signal, l'exposant de la distance dans cette loi de comportement du RSSI est généralement amené à 2,2.

Dans un mode de réalisation, la variation en fonction de la distance entre l'émetteur radio **1** et l'équipement utilisateur **2** de l'enveloppe (ou la valeur maximale) des niveaux de puissance normalisés des signaux **11-14** reçus (courbe en trait discontinu sur la figure 5) est approximé par un polynôme d'ordre deux. En revanche, la variation en fonction de la distance entre l'émetteur radio **1** et l'équipement utilisateur **2** de l'enveloppe (ou la valeur maximale) des rapports signal sur bruit normalisés relatifs aux différents signaux **11-14** reçus (courbe en pointillé sur la figure 5) est approximée par un polynôme d'ordre élevé.

Afin d'exploiter l'information de distance comprise dans les niveaux de puissance et dans les rapports signal sur bruit relatifs aux différents signaux **11-14,** une première fonction approchant les variations en fonction de la distance d'une valeur statistique (la valeur maximale, la valeur minimale, la moyenne, la médiane ou autre) des niveaux de puissance normalisés des signaux reçus (courbe en trait discontinu sur la figure 5) et une deuxième fonction approchant les variations en fonction de la distance d'une valeur statistique (la valeur maximale, la valeur minimale, la moyenne, la médiane ou autre) des rapports signal sur bruit normalisés sont déterminées. Pour cela, des méthodes de régression (multilinéaire, polynomiale, ou autre) peuvent être utilisées pour déterminer les paramètres de la fonction approchant la variation en fonction de la distance de la valeur statistique des niveaux de puissance normalisés des différents signaux **11-14** reçus et de la valeur statistique des rapports signal sur bruit normalisés relatifs aux différents signaux reçus **11-14.** Différentes techniques d'ajustement de courbe ou d'analyse de courbe expérimentale de l'état de l'art peuvent être utilisées à cette fin.

Dans un mode de réalisation, un indice de proximité *i* est formulé par une somme de la première fonction algébrique d'une valeur statistique des niveaux de puissance normalisés des signaux reçus et de la deuxième fonction algébrique d'une valeur statistique des rapports signal sur bruit normalisés. Ces deux fonctions algébriques sont, respectivement, pondérées par un premier coefficient de pondération non nul prédéfini et par un deuxième coefficient de pondération non nul prédéfini. La somme du premier coefficient de pondération et du deuxième coefficient de pondération est sensiblement égale à un.

Dans un mode de réalisation, un indice de proximité *i* de l'émetteur radio **1** est formulé comme suit :

$$i = \frac{2}{3}\sqrt{\overline{RSSI}} + \frac{1}{3}\left(\overline{SNR}^2 + \overline{SNR}\right)$$

Où $\overline{RSSI}$ et *SNR* représentent, respectivement,

- une valeur statistique (notamment, l'enveloppe) des niveaux de puissance normalisés des différents signaux **11-14** reçus par l'équipement utilisateur **2** à une certaine distance de l'émetteur radio **1** ;et
- une valeur statistique (notamment, l'enveloppe) des rapports signal sur bruit normalisés relatifs aux différents signaux **11-14** reçus par l'équipement utilisateur **2** à ladite certaine distance de l'émetteur radio **1.**

Cette formule illustrative de l'indice de proximité *i* est obtenue par linéarisation du RSSI normalisé (ou d'une manière équivalente, du RSS) comme si c'était une parabole et en tronquant le polynôme d'approximation du SNR normalisé.

Une illustration graphique, conforme à la formule ci-dessus, de l'indice de proximité *i* est donnée par la courbe en trait plein sur la figure 5.

L'indice de proximité *i* est une combinaison d'une première fonction approchant la variation en fonction de la distance de l'enveloppe des niveaux de puissance normalisés des signaux **11-14** reçus et d'une deuxième fonction approchant la variation en fonction de la distance de l'enveloppe des SNR normalisés de signaux **11-14** reçus d'une même séquence **10.** Dans un mode de réalisation, en dessous d'un certain seuil de RSSI*,* l'indice de proximité *i* est construit sur deux séquences **10** afin d'avoir plus d'une observation des signaux reçus. En-dessous d'un seuil plus bas encore, l'indice de proximité *i* est construit sur trois séquences **10.**

**EP 3 827 273 B1**

L'indice de proximité *i* est une fonction indicative de la distance séparant l'équipement utilisateur **2** de l'émetteur radio **1** source des signaux **11-14** reçus par ledit équipement utilisateur **2**.

Il convient de noter que la formule ci-dessus se base sur un exemple d'approximation approchant les variations, en fonction de la distance, de, respectivement, le niveau de puissance normalisé du signal reçu et le rapport signal sur bruit normalisé. Cette approximation polynomiale n'est donc, ici, qu'un exemple illustratif et n'est en aucun cas limitative.

Par conséquent, la première fonction $\left(\sqrt{\overline{RSSI}}\right)$ et la deuxième fonction $(\overline{SNR^2} + \overline{SNR})$ données à titre illustratif ci-dessus peuvent être remplacées par toutes autres expressions algébriques approximant les variations, en fonction de la distance, de, respectivement, le niveau de puissance normalisé du signal reçu et le rapport signal sur bruit normalisé.

Toute autre expression algébrique approchant la variation, en fonction de la distance, du RSSI et du SNR normalisés dans un même intervalle d'une pluralité de signaux **11-14** présentant une diversité en modulation et éventuellement en puissance d'émission est donc convenable pour en déduire une formulation en fonction de la distance de l'indice de proximité *i*.

Dans un mode de réalisation, le coefficient de pondération du RSSI, dans le calcul de l'indice de proximité *i*, est supérieur au coefficient de pondération du SNR parce que le RSSI est plus lié à la distance par rapport à l'émetteur radio **1** que le SNR, la somme des deux coefficients de pondération étant égale à l'unité. Un coefficient de pondération de 2/3 permet, avantageusement, d'amortir les variations du SNR. En variante, d'autres poids complémentaires peuvent être utilisés, pour pondérer, respectivement, le RSSI et le SNR, tels que ¾ et ¼, 3/5 et 2/5, ou 4/7 et 3/7. Un coefficient de pondération du RSSI supérieur au coefficient de pondération du SNR traduit la prépondérance dynamique du RSSI aux distances intermédiaires et proches de l'émetteur radio **1**.

Avantageusement, l'indice de proximité exploite simultanément deux grandeurs, à savoir le niveau de puissance du signal **11-14** reçu et le rapport entre la puissance de ce signal **11-14** et la puissance du bruit.

L'indice de proximité *i* est une fonction scalaire dépendante de la distance entre l'équipement utilisateur **2** et le l'émetteur radio **1**. Cette fonction scalaire associe à chaque point (ou position) de l'espace un scalaire dit indice de proximité *i* de l'équipement utilisateur **2** par rapport à l'émetteur radio **1**. Plus généralement, en considérant un système de coordonnées **R**, l'indice de proximité *i* est une fonction des coordonnées spatiales de l'équipement utilisateur **2** dans ce système de coordonnées **R**.

Le système de coordonnées **R** peut être un système de coordonnées cartériennes, cylindriques ou sphériques. Ce système de coordonnées **R** peut aussi être tridimensionnel ou bidimensionnel. Dans un mode de réalisation, le système de coordonnées **R** est un système de coordonnées géodésiques.

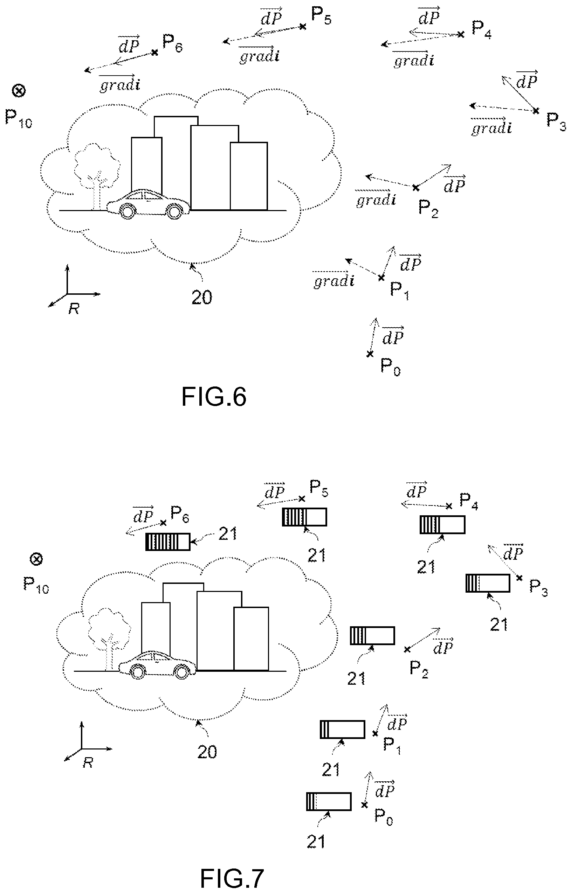

En se référant à la figure 6, la position $P_{10}$ de l'émetteur radio **1** est supposée être fixe dans le système de coordonnées **R**. Quant à l'équipement utilisateur **2**, il est mobile ou déplaçable dans l'environnement **20** (tel qu'un environnement urbain) en une pluralité de positions $P_0$ - $P_6$ par rapport à l'émetteur radio **1**. Sa position $(P_n)_{n \geq 0}$ est donc variable dans le système de coordonnées **R**.

Dans un mode de réalisation, l'équipement utilisateur **2** dispose ou, plus généralement, détermine les coordonnées spatiales de sa position $(P_n)_{n \geq 0}$ dans le système de coordonnées **R**. Pour cela, l'équipement utilisateur **2** comprend, dans un mode de réalisation, un capteur de positionnement (ou de géolocalisation). En alternative ou en combinaison, la position de l'équipement utilisateur **2** parvient à ce dernier depuis un dispositif distant (un serveur ou un dispositif utilisateur par exemples).

L'équipement utilisateur **2** détermine, en se basant sur les coordonnées spatiales de sa position $(P_n)_{n \geq 1}$ dans le système de coordonnées **R** et l'indice de proximité *i* calculé à cette position $(P_n)_{n \geq 1}$, un vecteur $\overrightarrow{grad\ i}$ dirigé/orienté à partir de cette position $(P_n)_{n \geq 1}$ de l'équipement utilisateur **2**, vers une position supposée être la position $P_{10}$ de l'émetteur radio **1**.

Ce vecteur $\overrightarrow{grad\ i}$ est le vecteur gradient de l'indice de proximité *i* à la position $(P_n)_{n \geq 1}$ courante de l'équipement utilisateur **2**.

L'opérateur gradient (aussi désigné par le vecteur-opérateur « nabla » $\overrightarrow{\nabla}$ associe à l'indice de proximité *i* un vecteur composé des dérivés partielles de l'indice de proximité *i* par rapport aux différentes dimensions du système de coordonnées **R**. L'opérateur gradient est un champ vectoriel qui caractérise les variations spatiales de la fonction scalaire « indice de proximité *i* ».

En effet, le vecteur gradient $\overrightarrow{grad\ i}$ de l'indice de proximité *i* est orienté vers les valeurs croissantes de cet indice de proximité *i*. Le vecteur gradient *i* pointe, en effet, vers les zones de croissance, en fonction de la distance entre l'équipement utilisateur **2** et l'émetteur radio **1**, de l'indice de proximité *i*. Il en résulte qu'à partir de la position courante $(P_n)_{n \geq 1}$ de l'équipement utilisateur **2**, le vecteur gradient $\overrightarrow{grad\ i}$ indique la direction dans laquelle l'indice de proximité *i* est maximum, supposée correspondre à la direction dans laquelle se trouve l'émetteur radio **1**.

Le vecteur gradient $\overrightarrow{grad\ i}$ de l'indice de proximité *i* indique la direction et le sens de déplacement permettant de maximiser l'indice de proximité *i* et, par conséquent, le sens de déplacement permettant d'atteindre la position $P_{10}$ de l'émetteur ratio **1**.

Le vecteur gradient $\overrightarrow{grad}\,i$ de l'indice de proximité *i* est calculé à chacune des positions $(P_n)_{n\geq1}$ de l'équipement utilisateur **2**. Ce vecteur gradient est, dans un mode de réalisation, affiché à l'intention de l'utilisateur **3** afin de le guider (ou radioguider) vers la position $P_{10}$ de l'émetteur radio **1**.

Dans un mode de réalisation, afin de mieux guider l'utilisateur **3** vers la position $P_{10}$ de l'émetteur radio **1**, le vecteur gradient $\overrightarrow{grad}\,i$ de l'indice de proximité *i* est affiché en combinaison avec le vecteur de déplacement $\overrightarrow{dP}$ de l'équipement utilisateur **2**.

Dans un mode de réalisation, le vecteur gradient $\overrightarrow{grad}\,i$ de l'indice de proximité *i* et le vecteur de déplacement $\overrightarrow{dP}$ de l'équipement utilisateur **2** sont calculés de manière continue ou quasi-continue. Avantageusement, la combinaison par addition vectorielle des vecteurs gradients $\overrightarrow{grad}\,i$ calculés aux différentes positions $(P_n)_{n\geq1}$ antérieures de l'équipement utilisateur **2** permet de construire un vecteur d'orientation vers la position $P_{10}$ de l'émetteur radio **1**.

Lorsque l'indice de proximité est sensiblement constant sur une pluralité de positions $(P_n)_{n\geq1}$ successives de l'équipement utilisateur **2** par rapport à la position $P_{10}$ de l'émetteur radio (ces positions se trouvant, de ce fait, sur une ligne iso-proximité), le vecteur gradient $\overrightarrow{grad}\,i$ de l'indice de proximité *i* est perpendiculaire aux vecteurs de déplacement $\overrightarrow{dP}$ liant ces positions. En revanche, lorsque l'équipement utilisateur **2** se déplace en direction de l'émetteur radio **1**, le vecteur gradient $\overrightarrow{grad}\,i$ de l'indice de proximité *i* et le vecteur de déplacement $\overrightarrow{dP}$ de l'équipement utilisateur **2** sont sensiblement colinéaires dans le même sens (par exemples, les positions $P_5$ et $P_6$ dans l'exemple de la figure 6).

Pour atteindre la position $P_{10}$ de l'émetteur radio 1, l'utilisateur 3 suit la direction et le sens du vecteur gradient $\overrightarrow{grad}\,i$ de l'indice de proximité *i*. Le vecteur de déplacement $\overrightarrow{dP}$ doit, donc, être colinéaire dans le même sens avec le vecteur gradient $\overrightarrow{grad}\,i$ de l'indice de proximité *i*.

L'amplitude (ou la norme) du vecteur gradient $\overrightarrow{grad}\,i$ de l'indice de proximité *i* indique le taux de variation, en fonction de la distance entre l'émetteur radio **1** et l'équipement utilisateur **2**, de l'indice de proximité *i* (permettant de distinguer un indice de proximité *i* fortement croissant synonyme qu'on se rapproche de l'émetteur radio **1**). Quant au vecteur de déplacement $\overrightarrow{dP}$, il s'agit d'un vecteur indiquant la direction et le sens de déplacement de l'équipement utilisateur **2** (c.à.d. l'axe de progression de l'utilisateur **3**). Deux positions successives de l'équipement utilisateur **2** sont liées par un vecteur de déplacement $\overrightarrow{dP}$.

Ainsi, en se déplaçant par rapport à la position $P_{10}$ de l'émetteur radio **1**, l'équipement utilisateur **2**

- calcule un indice de proximité à chacune de ses positions $P_0$ - $P_6$ par rapport à la position $P_{10}$ de l'émetteur radio **1** ;
- détermine, à une ou à chacune de ses positions $P_1$-$P_6$, les coordonnées du vecteur gradient $\overrightarrow{grad}\,i$ de l'indice de proximité *i* calculé aux positions $P_0$ -$P_6$. Ce vecteur gradient $\overrightarrow{grad}\,i$ pointe, à partir de ces positions, vers les zones de croissance, en fonction de la distance entre l'équipement utilisateur **2** et l'émetteur radio **1**, de l'indice de proximité.

Ainsi calculé, le vecteur gradient $\overrightarrow{grad}\,i$ de l'indice de proximité *i* est supposé indiquer la direction, à partir de la position actuelle $P_1$-$P_6$ de l'équipement utilisateur **2**, dans laquelle se trouve l'émetteur radio **1** source du signal reçu par l'équipement utilisateur **2** à cette position $P_1$-$P_6$. La distance entre deux positions successives de l'équipement utilisateur **2** est, dans un mode de réalisation, supérieure à la précision à laquelle sont estimées ces positions $P_1$-$P_6$. Par exemple, la distance entre deux positions successives de l'équipement utilisateur **2** est, dans un mode de réalisation, de l'ordre de dix fois la précision du capteur de positionnement équipant cet équipement utilisateur **2**. Cette condition peut être remplie par exemple lorsque l'équipement utilisateur **2** est transporté par un moyen aérien (avion, hélicoptère) ou par un véhicule se déplaçant à une vitesse supérieure à 7 mètres par seconde. Plus généralement, la position $P_{n+1}$ de l'équipement utilisateur **2** est choisie de sorte que la distance entre cette position $P_{n+1}$ et la position précédente $P_n$ de l'équipement utilisateur **2** est supérieure, voire largement supérieure, à la précision à laquelle ces positions $P_n$, $P_{n+1}$ sont déterminées.

Dans un système de coordonnées **R** cartésiennes, le vecteur gradient $\overrightarrow{grad}\,i$ de l'indice de proximité *i* s'exprime comme suit

$$\overrightarrow{grad}\,\boldsymbol{i}(x,y,z) = \frac{\partial i(x,y,z)}{\partial x}\overrightarrow{u_x} + \frac{\partial i(x,y,z)}{\partial y}\overrightarrow{u_y} + \frac{\partial i(x,y,z)}{\partial z}\overrightarrow{u_z}$$

où (*x,y,z*) sont les coordonnées de la position $(P_n)_{n\geq1}$ de l'équipement utilisateur **2** dans ce système de coordonnées **R**.

Dans un système de coordonnées **R** cylindriques, le vecteur gradient $\overrightarrow{grad}\,i$ est donné par

$$\overrightarrow{grad}\,i(r,\theta,z) = \frac{\partial i(r,\theta,z)}{\partial r}\overrightarrow{u_r} + \frac{1}{r}\frac{\partial i(r,\theta,z)}{\partial \theta}\overrightarrow{u_\theta} + \frac{\partial i(r,\theta,z)}{\partial z}\overrightarrow{u_z}$$

où $(r,\theta,z)$ sont les coordonnées de la position $(P_n)_{n\geq 1}$ de l'équipement utilisateur **2** dans ce système de coordonnées **R**.
Dans un système de coordonnées **R** sphériques, le vecteur gradient $\overrightarrow{grad}\,i$ se présente suit :

$$\overrightarrow{grad}\,i(r,\theta,\varphi) = \frac{\partial i(r,\theta,\varphi)}{\partial r}\overrightarrow{u_r} + \frac{1}{r}\frac{\partial i(r,\theta,\varphi)}{\partial \theta}\overrightarrow{u_\theta} + \frac{1}{r\,sin\theta}\frac{\partial i(r,\theta,\varphi)}{\partial \varphi}\overrightarrow{u_\varphi}$$

où $(r,\theta,\varphi)$ sont les coordonnées de la position $(P_n)_{n\geq 1}$ de l'équipement utilisateur **2** dans ce système de coordonnées **R**.
Dans une mise en oeuvre illustrative, le vecteur gradient $\overrightarrow{grad}\,i$ de l'indice de proximité $i$ exprimé dans un système de coordonnés **R** cartésiennes en fonction des coordonnées $(x,y,z)$ de la position $(P_n)_{n\geq 1}$ courante de l'équipement utilisateur **2** se présente comme suit :

$$\overrightarrow{grad}\,i(x,y,z) = \begin{bmatrix} \dfrac{\partial i(x,y,z)}{\partial x} \\[2mm] \dfrac{\partial i(x,y,z)}{\partial y} \\[2mm] \dfrac{\partial i(x,y,z)}{\partial z} \end{bmatrix}$$

Les coordonnées de ce vecteur gradient $\overrightarrow{grad}\,i(x,y,z)$ sont, dans un mode de réalisation, approximées comme suit :

$$\overrightarrow{grad}\,i(x,y,z) \approx \begin{bmatrix} \dfrac{i(x+d_1,y,z) - i(x,y,z)}{d_1} \\[2mm] \dfrac{\partial i(x,y+d_2,z) - i(x,y,z)}{d_2} \\[2mm] \dfrac{\partial i(x,y,z+d_3) - i(x,y,z)}{d_3} \end{bmatrix}$$

où $d_1, d_2$ et $d_3$ désignent les distances de déplacement selon les trois axes du parcours $\overrightarrow{\delta P}$ de l'équipement utilisateur **2** dans les directions $\overrightarrow{u_x}$, $\overrightarrow{u_y}$ et $\overrightarrow{u_z}$ (c.a.d. $\overrightarrow{\delta P} = d_1\overrightarrow{u_x} + d_2\overrightarrow{u_y} + d_3\overrightarrow{u_z}$) pour un module de $\overrightarrow{\delta P}$ Supérieur à 200 mètres.
Dans un mode de réalisation, qui peut être appliqué aux vitesses de déplacement de l'équipement utilisateur **2** inférieures à une valeur de vitesse prédéfinie telle que 7 mètres par seconde, deux positions successives $(P_{n+1})_{n\geq 1}$ et $(P_n)_{n\geq 0}$ de l'équipement utilisateur **2** sont définies par un déplacement élémentaire $\overrightarrow{dP}$ (c'est-à-dire, $\overrightarrow{P_nP_{n+1}} = \overrightarrow{dP}$ tel que par exemple, $\overrightarrow{P_0P_1} = \overrightarrow{dP}$ ou $\overrightarrow{P_3P_4} = \overrightarrow{dP}$). Le vecteur gradient est alors approximé en direction par le bipoint $\overrightarrow{dP}$ et en module par le rapport de l'écart des deux indices de proximités au module du déplacement $\overrightarrow{dP}$.
Dans un autre mode de réalisation, les coordonnées de ce vecteur gradient $\overrightarrow{grad}\,i(x,y,z)$ sont approximées comme suit :

$$\overrightarrow{grad}\,i(x,y,z) \approx \begin{bmatrix} \dfrac{i(x+d_1,y,z) - i(x-d_1,y,z)}{2d_1} \\[2mm] \dfrac{\partial i(x,y+d_2,z) - i(x,y-d_2,z)}{2d_2} \\[2mm] \dfrac{\partial i(x,y,z+d_3) - i(x,y,z-d_3)}{2d_3} \end{bmatrix}$$

L'équipement utilisateur **2** est, dans un mode de réalisation, configuré pour mémoriser l'indice de proximité $i$

calculé à une pluralité de positions $(P_n)_{n \geq 0}$ antérieures de l'équipement utilisateur **2**, ainsi que les coordonnées de ces positions antérieures en association avec les indices de proximité **i** calculés à ces positions.

Plus généralement, les coordonnées du vecteur gradient $\overrightarrow{grad\ i}$ sont déterminées à partir des valeurs de l'indice de proximité **i** calculées à différentes positions $(P_n)_{n \geq 0}$ de l'équipement utilisateur **2** en utilisant toute méthode d'approximation convenable à cette fin.

Lorsque les coordonnées, dans le système de coordonnées **R**, des positions $P_1$-$P_6$ de l'équipement utilisateur **2** sont inconnues (absence du signal de géolocalisation satellitaire par exemple), il est possible de déterminer la norme du vecteur gradient $\overrightarrow{grad\ i}$ de l'indice de proximité **i** à partir de sa relation avec la différentielle $di = i(P_{n+1})$-$i(P_n)$ où $i(P_{n+1})$ et $i(P_n)$ sont les valeurs de l'indice de proximité **i** calculé à deux positions successives de l'équipement utilisateur **2**. En considérant, en effet, un déplacement $\overrightarrow{dP} = \overrightarrow{P_n P_{n+1}}$ élémentaire entre deux positions infiniment voisines $P_n$ et $P_{n+1}$ de l'équipement utilisateur **2**, la différentielle di de l'indice de proximité **i** représente la variation de la fonction scalaire de l'indice de proximité **i** comme suit $di = i(P_{n+1})$ - $i(P_n)$ = $\overrightarrow{grad\ i} \cdot \overrightarrow{P_n P_{n+1}}$ où $i(P_n)$ et $i(P_{n+1})$ sont respectivement l'indice de proximité calculé à la position $P_n$ et à la position $P_{n+1}$ de l'équipement utilisateur **2**.

La norme du vecteur gradient $\overrightarrow{grad\ i}$ de l'indice de proximité **i** est donnée par

$$\left\| \overrightarrow{grad\ i} \right\| = \frac{i(P_{n+1}) - i(P_n)}{\left\| \overrightarrow{P_n P_{n+1}} \right\| \cos\left(\overrightarrow{grad\ i},\ \overrightarrow{P_n P_{n+1}}\right)}$$ où $\left\| \overrightarrow{P_n P_{n+1}} \right\|$ est la distance entre les deux positions successives de l'équipement utilisateur **2** et $\cos\left(\overrightarrow{grad\ i},\ \overrightarrow{P_n P_{n+1}}\right)$ est le cosinus de l'angle formé par le vecteur gradient $\overrightarrow{gard\ i}$ et le vecteur de déplacement $\overrightarrow{dP}$ élémentaire. La norme de ce vecteur gradient $\overrightarrow{grad\ i}$ est maximale lorsque le vecteur de déplacement $\overrightarrow{dP} = \overrightarrow{P_n P_{n+1}}$ élémentaire de l'équipement utilisateur **2** est colinéaire et de même sens avec le vecteur gradient $\overrightarrow{grad\ i}$.

Dans un mode de réalisation et afin d'atteindre la position de l'émetteur radio **1**, l'utilisateur **3** pourvu de l'équipement utilisateur **2** procède, lors de son déplacement par rapport à l'émetteur radio **1**, à la maximisation de la norme du vecteur gradient de l'indice de proximité. Pour cela, à chaque position $P_n$ de l'équipement utilisateur, sa nouvelle position $P_{n+1}$ est celle qui maximise la norme $\|\overrightarrow{grad\ i}\|$ du vecteur gradient de l'indice de proximité **i**. Le radioguidage vers la position $P_{10}$ de l'émetteur radio **1** est obtenu en maximisant, lors du déplacement de l'équipement **2** par rapport à l'émetteur radio **1**, la norme du vecteur gradient de l'indice de proximité.

En variante ou en combinaison, l'indice de proximité **i** est calculé à deux déplacements $\overrightarrow{dP}$ élémentaires $\overrightarrow{P_n P_{n+1}}$ et $\overrightarrow{P_n P_{n+2}}$ non colinéaires à partir d'une même position $P_n$ de sorte à obtenir un système d'équation (

$$\left\| \overrightarrow{grad\ i} \right\| = \frac{i(P_{n+1}) - i(P_n)}{\left\| \overrightarrow{P_n P_{n+1}} \right\| \cos\left(\overrightarrow{grad\ i},\ \overrightarrow{P_n P_{n+1}}\right)}$$, $\|\overrightarrow{grad\ i}\| = \frac{i(P_{n+2}) - i(P_n)}{\left\| \overrightarrow{P_n P_{n+2}} \right\| \cos\left(\overrightarrow{grad\ i},\ \overrightarrow{P_n P_{n+2}}\right)}$ ) permettant la détermination de la norme $\|\overrightarrow{grad\ i}\|$ et l'angle que fait le vecteur gradient $\overrightarrow{grad\ i}$ par rapport à au moins un de ces déplacement élémentaires.

Il en résulte qu'en l'absence des coordonnées, dans le système de coordonnées **R**, de la position $P_n$ de l'équipement utilisateur **2**, il est possible de déterminer le vecteur gradient $\overrightarrow{grad\ i}$ de l'indice de proximité en calculant l'indice de proximité **i** en une pluralité de déplacements $\overrightarrow{dP}$ élémentaires prédéfinis non colinéaires par rapport à la position actuelle de l'équipement utilisateur **2**. Les indices de proximité **i** en une pluralité de déplacements $\overrightarrow{dP}$ élémentaires peuvent être calculés en utilisant une antenne réceptrice configurée pour être disposée à des déplacements $\overrightarrow{dP}$ élémentaires prédéfinis. Ces déplacements $\overrightarrow{dP}$ élémentaires peuvent être définis de manière relative (c.à.d. l'un par rapport à un autre ou par rapports aux autres) ou de manière absolue (par exemple, par rapport à la direction nord géographique, ou par rapport aux axes du système de coordonnées **R)**.

Tel qu'il est illustré par la figure 7, l'équipement utilisateur **2** affiche à l'intention de l'utilisateur **3** la norme $\|\overrightarrow{grad\ i}\|$ du vecteur gradient de l'indice de proximité **i** sous la forme d'une jauge **21** qui conserve son extremum en mémoire. Dans un mode de réalisation, en calculant l'indice de proximité **i** en une pluralité de positions obtenues par des déplacements $\overrightarrow{dP}$ élémentaires autour de la position $P_n$ courante de l'équipement utilisateur **2**, l'utilisateur **3** choisit comme prochaine position $P_{n+1}$ (c.à.d. comme direction de progression $\overrightarrow{P_n P_{n+1}}$) une position dans la direction et le sens du déplacement $\overrightarrow{dP}$ élémentaire maximisant le niveau de la jauge **21**.

Dans un mode de réalisation, le parcours de l'utilisateur **3** est dépeint par un code couleur défini en fonction de l'amplitude du vecteur gradient de l'indice de proximité de sorte que la direction de déplacement vers les zones de croissance de l'indice de proximité **i** puissent en être déduite. En se basant sur l'exemple de la figure 5, la courbe de l'indice de proximité **i** (en trait plein sur la figure 5) présente une pente, en valeur absolue, croissante en s'approchant de l'émetteur radio **1**. Ainsi, un vecteur gradient dont la norme croit rapidement en fonction de la distance est synonyme qu'on se rapproche de l'émetteur radio **1** tandis qu'un vecteur gradient d'amplitude décroissante en fonction de la distance est synonyme qu'on s'en éloigne.

Par ailleurs, l'indice de proximité, obtenu par combinaison du RSSI et du SNR, peut être utilisée non seulement comme un indicateur de proximité et d'orientation vers l'émetteur radio **1**, mais aussi comme un indicateur sur la distance séparant l'équipement utilisateur **2** de l'émetteur radio **1** et par conséquent de localisation de l'émetteur radio **1**.

En effet, la distance **D** entre l'équipement utilisateur **2** et l'émetteur radio **1** est estimée à partir de l'indice de proximité *i* selon la formule suivante reliant l'indice de proximité *i* à cette distance **D** :

$$log_{10}(D) = \frac{1}{log_{10}(2,2*k)} * log_{10}\left(\frac{2,2*k}{i}\right)$$

où **k** est un coefficient prédéterminé dépendant de l'environnement **20** dans lequel les mesures du niveau de puissance du signal reçu et du SNR sont effectuées, c'est-à-dire de la position de mesure. En environnement urbain, ce facteur est égal à un (**k = 1**).

Dans un mode de réalisation, l'utilisateur **2** sélectionne un type d'environnement parmi une liste d'environnements **20** prédéfinie qui lui est proposée et pour lesquels des coefficients **k** sont préalablement associées. En variante, le type d'environnement (et par conséquent le coefficient **k**) est déterminé à partir d'une géolocalisation satellitaire de l'utilisateur **3** au moyen de capteurs dédiés compris dans l'équipement utilisateur **2**.

En mesurant le niveau de puissance du signal radio reçu et le rapport signal sur bruit relatifs à chacun des signaux **11-14** reçus de la séquence **10**, un indice de proximité est calculé, en application d'une formule préétablie de cet indice de proximité.

A chaque calcul de l'indice de proximité *i*, une distance séparant l'équipement utilisateur **2** de l'émetteur radio **1** peut également être estimée, à partir de cet indice de proximité *i*. Dans un autre mode de réalisation, la distance séparant l'équipement utilisateur **2** de l'émetteur radio **1** est estimée en se basant sur une loi de comportement du RSSI en fonction de la distance **D** dans un environnement **20** donné (par exemple, en environnement **20** urbain $RSSI \approx 0,15 + 0.01/D^{2,2}$).

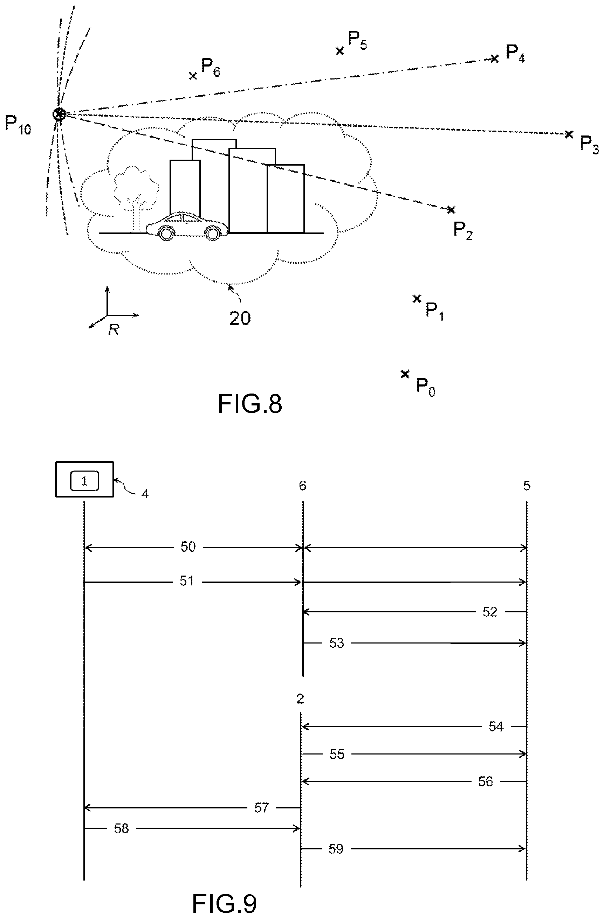

Une trilatération à l'effet de localiser l'émetteur radio **1** est, par conséquent, possible à partir de l'estimation de cette distance en au moins trois positions différentes de l'équipement utilisateur **2**. Tel qu'il illustré par la figure 8, l'intersection des trois cercles centrés sur les trois positions $P_2$, $P_3$ et $P_4$ de l'équipement utilisateur **2** et de rayons, respectivement, la distance estimée à chacune de ces positions permet d'avoir une approximation de la position $P_{10}$ de l'émetteur radio **1**. En cas d'ambiguïté, des positions additionnelles de l'équipement utilisateur **2** peuvent être utilisées, pour affiner l'estimation de la position $P_{10}$ de l'émetteur radio **1**.

En se référant maintenant à la figure 9, il est affiché un objet **4** cible auquel est lié un émetteur radio **1**. Cet émetteur radio **1** est connecté à un serveur **5** de suivi des émetteurs radio **1** de type celui lié à l'objet cible **4.**

L'émetteur radio **1** est lié à l'objet **4** cible de sorte à permettre la localisation dudit objet **4** cible. Cet objet **4** cible est, par exemple, un objet mobile tel qu'un véhicule automobile, un chariot, ou un animal. En variante, l'objet **4** cible est un objet portatif tel par exemple une valise, une montre, un porte-clefs, un sac-à-dos, un sac-à-main, un téléphone, un portefeuille, ou une boite à outils.

Plus généralement, l'objet **4** cible est tout objet dont la localisation ou un suivi de sa localisation est souhaitée, tel qu'un conteneur de marchandise, une voiture, une moto, ou un vélo.

L'émetteur radio **1** a, dans un mode de réalisation, la forme d'un tag, d'une puce de faible consommation d'énergie électrique et d'extrême miniaturisation. L'émetteur radio **1** peut être prévu comme partie intégrante de l'objet **4** cible, ou y être lié plus tard par l'utilisateur final.

Ainsi dotés d'une capacité de communication, de tels objets **4** cibles peuvent être localisés par l'équipement utilisateur **2** se trouvant à portée radio de l'émetteur radio **1** qu'ils intègrent.

Lors d'une étape d'enregistrement **50** préalable de l'émetteur radio **1** auprès du serveur **5** de suivi, des données de configuration (identifiant, adresse physique/IP, clé de chiffrement, fréquence de récurrence des communications, créneau d'émission dans une division TDMA par exemples) sont échangées entre le serveur **5** et l'émetteur radio **1** permettant l'établissement d'une communication ultérieure entre eux. Les communications entre l'émetteur radio **1** et le serveur **5** de suivi sont, de préférence, établies via un réseau **6** public de communications mobiles.

Dans un mode de réalisation, l'émetteur radio **1** communique (étape 51) sa position au serveur **5** de suivi, à des intervalles de temps prédéfinis. L'émetteur radio **1** obtient sa localisation à partir d'un dispositif de géolocalisation qui y est disposé, où à partir de tout autre dispositif auquel il est connecté.

Dans un autre mode de réalisation, c'est le réseau **6** qui procure au serveur **5** les données de géolocalisation de l'émetteur radio **1**.

Dans un mode de réalisation, l'émetteur radio **1** synchronise son horloge et calcule, d'une manière régulière, sa position à partir de l'observation de satellites de navigation. L'émetteur radio **1** stocke et date sa dernière position calculée. L'émetteur radio **1** communique (étape 51) au serveur **5** de suivi sa position datée, son état de mouvement, son état de synchronisation et la date de cette communication.

Le serveur **5** de suivi stocke les informations qui lui sont communiquées par l'émetteur radio **1**. Le serveur **5** est notamment à même de déterminer la dérive de l'horloge de l'émetteur radio 1 en comparant les intervalles de temps observés de ses émissions programmées aux intervalles de temps prévus.

Dans un mode de réalisation, à défaut d'avoir une position récente de l'émetteur radio **1,** le serveur **5** de suivi requiert (étape **52)** une position de l'émetteur radio **1** de la part du réseau **6** public de communications mobiles.

En réponse, le réseau **6** public de communications mobiles détermine une position approximative de l'émetteur radio **1,** en fonction des niveaux reçus par les stations réceptrices de ce réseau **6.** Le réseau **6** public de communications mobiles communique ensuite (étape **53)** la position déterminée au serveur **5** de suivi.

Le serveur **5** de suivi stocke la position et la date à laquelle elle est déterminée par le réseau **6** public de communications mobiles.

Il arrive, cependant, que le serveur **5** de suivi ne dispose plus d'une position à jour de l'émetteur radio **1** (ou d'une manière équivalente, de l'objet **4** cible). Différentes raisons peuvent être à l'origine de cet incident telles que, par exemples, l'objet **4** cible est perdu, l'objet **4** cible est volé, l'arrêt ou un dysfonctionnement dans l'interface de communication de l'émetteur radio **1** avec le réseau **6** public de communications mobiles, ou la présence de l'émetteur radio **1** dans un environnement non coopératif empêchant sa communication avec le réseau **6** public de communications mobiles. La position de l'émetteur radio **1** est, dans un mode de réalisation, imprédictible (par dissémination, par égarement, par détournement ou par vol, par exemples).

Dans un mode de réalisation, l'objet **4** cible est dans un environnement intérieur confiné, tel qu'un atelier, un entrepôt, un garage, ou un parking couvert ou souterrain, alors que l'équipement utilisateur **2** est dans un environnement extérieur (une rue/route dans un environnement suburbain, urbain, urbain dense, périurbain, ou rural). Dans un mode de réalisation, l'objet **4** cible est dans un environnement où une géolocalisation par satellite est indisponible.

Dans ce cas, le serveur **5** de suivi transmet (étape **54),** sur requête ou non, la dernière position datée connue de l'émetteur radio **1** à l'équipement utilisateur **2.**

L'utilisateur **3** de l'équipement utilisateur **2** décide, lorsque l'objet cible **4** est hors de vue directe à partir de la dernière position datée connue qui lui est transmise, d'entamer une procédure de radioguidage vers l'émetteur radio **1.** Dans un mode de réalisation, le point de départ de l'équipement utilisateur est la dernière position GPS de l'objet connecté connue du serveur **5** de suivi.

Pour cela, l'équipement utilisateur **2** envoie (étape **55)** une requête de trame de recherche auprès du serveur **5** de suivi.

Suite à cette requête, le serveur **5** de suivi élabore une commande de radioguidage avec un certain nombre d'arguments qui définissent une séquence **10** de signaux **11-14** que l'émetteur radio **1** doit exécuter. Le serveur **5** de suivi ajoute la signature temporaire de cet émetteur radio **1** et une approximation de la différence de l'horloge de l'émetteur radio **1** avec l'horloge absolue partagée par le serveur **5** et l'équipement utilisateur **2.**

Dans un mode de réalisation, la commande de radioguidage définit des émissions à exécuter par l'émetteur radio **1** qui présentent une diversité en modulation (par exemple, en étalement de spectre) et en puissance.

Les données de cette commande de radioguidage sont chiffrées avec une clé secrète associée à l'émetteur radio **1** et avec un vecteur d'initialisation lié à la date d'élaboration. Le serveur **5** de suivi élabore la trame destinée à l'émetteur radio, en ajoutant à la commande de radioguidage l'en-tête, le vecteur d'initialisation et l'adresse physique de l'émetteur radio **1.**

Dans un mode de réalisation, le serveur **5** de suivi élabore une salve d'émissions de la trame par l'équipement utilisateur **2,** en fonction de la désynchronisation qu'on peut attendre de l'émetteur radio **1.** Le serveur **5** de suivi optimise la probabilité d'interception selon que l'instant d'ouverture de l'équipement utilisateur **2** est assez bien connu ou non.

Le serveur **5** de suivi transmet (étape **56)** le message d'activation du radioguidage, ainsi élaboré, à l'équipement utilisateur **2.**

A la réception du message d'activation du radioguidage, l'équipement utilisateur **2** amorce (étape **57)** la salve d'émission de trames pour la durée de répétition définie par le serveur **5** de suivi en créant les émissions convenues. L'équipement utilisateur **2** commence par un préambule, qui va permettre à l'émetteur radio **1** de reconnaître une émission amie. L'équipement utilisateur **2** réitère l'envoi (étape **57)** de la commande de radioguidage à destination de l'émetteur radio **1** jusqu'à l'obtention de ce dernier un accusé de réception.

Par ailleurs, l'émetteur radio **1** comprend un récepteur configuré pour capter les signaux émis par l'équipement utilisateur **2.** L'émetteur radio **1** ouvre périodiquement son récepteur pendant un temps suffisant pour capturer deux symboles au débit du facteur d'étalement correspondant à la portée maximale du message.

L'émetteur radio **1** finit par intercepter l'émission amie. Si l'adresse physique n'est pas la sienne, il reste en réception. Sinon, il décode l'ensemble de la trame.

L'émetteur radio **1** déchiffre la commande de radioguidage en utilisant sa clé secrète et le vecteur d'initialisation inclus dans la trame reçue. L'émetteur radio **1** élabore, ensuite, le contenu du message de réponse (dernière position datée, état de mouvement, état de synchronisation) et le signe. Pendant ce temps, l'équipement utilisateur **2** se place en écoute permanente sur la fréquence courante de l'émetteur radio **1.**

L'émetteur radio **1** émet (étape **58)** la séquence **10** des signaux **11-14** conformément aux informations comprises dans la commande de radioguidage (type et paramètres de la modulation, fréquence, facteur d'étalement de spectre, puissance, fréquence de récurrence d'émission des signaux par exemples), jusqu'à l'expiration du temps imparti. Il émet le contenu en clair (la signature exclut le risque de confusion provoquée).

L'émetteur radio **1** émet à la demande de l'équipement utilisateur **2** les signaux **11-14** récurrents qui sont reçus à des positions successives de l'équipement utilisateur **2**. Au moins deux des signaux **11-14** émis présentent une diversité de modulation (par étalement de spectre par exemple).

L'équipement utilisateur **2** reçoit, à une certaine distance de l'émetteur radio **1** (à sensiblement la même portée de sorte que l'interception radioélectrique ne puisse être manquée par l'utilisateur), les signaux émis par l'émetteur radio **1** et mesure, pour chacun des signaux **11-14** reçus, le niveau de puissance (RSSI) et le rapport signal sur bruit (SNR) relatifs à chacun ces signaux **11-14** de la séquence **10**. Lorsque les RSSI et les SNR relatifs à deux signaux **11-14** différents d'une même séquence **10** sont mesurés à deux distances différentes de l'équipement utilisateur **2** par rapport à l'émetteur radio **1** (c.à.d. lorsque l'un est en mouvement par rapport à l'autre), la différence entre ces deux distances est supposée négligeable par rapport à la distance séparant l'équipement utilisateur **2** de l'objet **4** cible. Cette approximation suppose que la distance parcourue par l'équipement utilisateur **2** entre la réception d'un premier signal émis et la réception d'un deuxième signal émis est très faible par rapport à la distance le séparant de l'émetteur radio **1**. En variante, la durée de la séquence **10** est adaptée en fonction de la vitesse de déplacement relative de l'équipement utilisateur **2** par rapport à l'émetteur radio **1**.

L'équipement utilisateur **2** calcule, ensuite, une valeur statistique (la valeur maximale, la moyenne, la valeur minimale, la médiane ou autre) des niveaux de puissance des signaux **11-14** reçus et une valeur statistique (la valeur maximale, la moyenne, la valeur minimale, la médiane ou autre) des rapports signal sur bruit relatifs à ces signaux **11-14** reçus sensiblement à une même distance de l'émetteur radio **1**.

A partir de ces valeurs statistiques, l'équipement utilisateur **2** calcule un indice de proximité *i* tel qu'il est expliqué ci-dessus (en application de la formule de l'indice de proximité *i* ci-dessus ou toute autre formule qui lui est équivalente).

L'équipement utilisateur **2** réitère le calcul de l'indice de proximité *i* en une pluralité de positions par rapport à l'émetteur radio **1** et détermine un vecteur gradient de l'indice de proximité *i*. La détermination de ce vecteur gradient utilise, dans un mode de réalisation, les coordonnées (notamment, géodésiques fournies par un capteur de positionnement) connues, dans un système de coordonnées *R* prédéfini, des positions de l'équipement utilisateur **2**. Dans un autre mode de réalisation, la détermination du vecteur gradient se base sur des déplacements élémentaires prédéfinis de l'équipement utilisateur **2** dans ce système de coordonnées.

Dans un mode de réalisation, l'équipement utilisateur **2** affiche sur une carte le vecteur gradient de l'indice de proximité *i*, de préférence avec le vecteur de déplacement de l'équipement utilisateur 2. En variante ou en combinaison, l'amplitude du vecteur gradient de l'indice de proximité est affichée sous la forme d'une jauge qui conserve son extremum en mémoire. La position actuelle de l'équipement utilisateur **2** est affichée via un code couleur ou un taux de remplissage de la jauge qui varie, par rapport à l'extremum mémorisé, d'une première valeur (synonyme de « s'éloigner ») à une deuxième valeur (synonyme de « s'approcher »).

Dans un mode de réalisation, le parcours de l'utilisateur **3** est dépeint par un code couleur, défini en fonction de l'indice de sa proximité par rapport à l'émetteur radio **1**.

L'équipement utilisateur **2** peut adresser une requête (étape **59**) au serveur **5** de suivi, pour obtenir un jeu de modulation plus discriminant en phase terminale (puissance réduite et/ou facteur d'étalement plus serré par exemple).

En réponse à la requête de l'équipement utilisateur **2,** le serveur **5** de suivi élabore le contenu d'une nouvelle commande de radioguidage à discrimination renforcée. Le processus précédemment décrit s'applique comme une nouvelle itération à une échelle resserrée de quelques mètres.

Les méthodes et systèmes décrits ci-dessus sont, dans un mode de réalisation, utilisés en alternative à une autre technique de localisation (par exemple, une géolocalisation par satellites et/ou terrestre), notamment lorsque l'émetteur radio **1** dispose de très peu d'énergie électrique ou qu'il se trouve dans un environnement non coopératif.

Avantageusement, la mise en oeuvre des méthodes décrites ci-dessus nécessite un temps de calcul réduit, favorisant l'autonomie énergétique de l'équipement utilisateur. Ces méthodes ont, en outre, pour avantage de couvrir tout canal de propagation radio (notamment, semi-intérieur ou semi-extérieur) liant l'émetteur radio **1** à l'équipement utilisateur **2**.

## Revendications

1. Méthode de radioguidage vers un émetteur radio **(1)** à partir de signaux **(11-14)** émis par cet émetteur radio **(1)** et reçus par un équipement utilisateur **(2),** cette méthode comprenant les étapes suivantes :

    - émission successive, depuis une position cible, par l'émetteur radio **(1)** d'une pluralité de signaux **(11-14)** intégrant :

        ◦ un premier signal **(11)** modulé par une première modulation, ce premier signal **(11)** étant émis avec une première puissance d'émission ;

◦ un deuxième signal **(14)** modulé par une deuxième modulation différente de la première modulation, ce deuxième signal **(14)** étant émis avec une deuxième puissance d'émission ;

- déplacement de l'équipement utilisateur **(2)** en une pluralité de positions par rapport à l'émetteur radio **(1)** ;
- a chaque position de ladite pluralité de positions,

◦ mesure, par l'équipement utilisateur **(2),** du niveau de puissance du signal reçu relatif à chaque signal émis de ladite pluralité de signaux (11-14)

le méthode étant **caractérisé par** les étapes suivantes:
- a chaque position de ladite pluralité de positions,

o mesure, par l'équipement utilisateur (2), du rapport signal sur bruit relatif à chaque signal émis de ladite pluralité de signaux **(11-14),** le niveau de puissance du signal reçu variant dans un premier intervalle prédéfini, le rapport signal sur bruit relatif à un signal reçu variant dans un deuxième intervalle prédéfini ;
◦ normalisation dans un même troisième intervalle prédéfini de chacun des niveaux de puissance et des rapports signal sur bruit mesurés ;
◦ calcul d'une première valeur statistique des niveaux de puissance normalisés;
◦ calcul d'une deuxième valeur statistique des rapports signal sur bruit normalisés;
◦ calcul d'un indice de proximité de l'émetteur radio (1), cet indice de proximité étant égal à la somme d'une première fonction algébrique de la première valeur statistique et d'une deuxième fonction algébrique de la deuxième valeur statistique, la première fonction et la deuxième fonction étant, respectivement, pondérées par un premier coefficient de pondération non nul prédéfini et par un deuxième coefficient de pondération non nul prédéfini, la somme du premier coefficient de pondération et du deuxième coefficient de pondération étant sensiblement égale à un ;

- détermination, à une position de ladite pluralité de positions, d'un vecteur gradient de l'indice de proximité calculé auxdites pluralité de positions, ce vecteur gradient pointant, à partir de ladite position, vers les zones de croissance, en fonction de la distance entre l'équipement utilisateur (2) et l'émetteur radio (1), de l'indice de proximité.

2. Méthode selon la revendication précédente, comprenant, en outre, une étape de détermination des coordonnées, dans un système de coordonnées prédéfini, de chaque position de ladite pluralité de positions.

3. Méthode selon la revendication 1 ou 2, comprenant, en outre, une étape de détermination d'un premier vecteur de déplacement de l'équipement utilisateur **(2)** liant une première position et une deuxième position de ladite pluralité de positions.

4. Méthode selon la revendication précédente, comprenant, en outre, les étapes suivantes

- détermination d'un deuxième vecteur de déplacement de l'équipement utilisateur **(2)** liant la première position et une troisième position de ladite pluralité de positions ;
- calcul de l'indice de proximité à la première position, à la deuxième position et à la troisième position.

5. Méthode selon la revendication 3 ou 4, comprenant, en outre, une étape d'affichage du vecteur gradient déterminé à une première position et du vecteur de déplacement déterminé liant cette première position et la deuxième position.

6. Méthode selon l'une quelconque des revendications précédentes, comprenant, en outre, une étape de calcul de la norme du vecteur gradient de l'indice de proximité.

7. Méthode selon l'une quelconque des revendications précédentes, comprenant, en outre, une étape de calcul, à partir de l'indice de proximité, d'une distance séparant la position cible d'une position de ladite pluralité de positions, selon la formule suivante $log_{10}(D) = \frac{1}{log_{10}(2,2*k)} * log_{10}\left(\frac{2,2*k}{i}\right)$ où **k** est un coefficient prédéfini, *D* est la distance à calculer, et *i* est l'indice de proximité calculé à ladite position de ladite pluralité de positions.

**8.** Méthode selon la revendication précédente, comprenant, eu outre, une étape de localisation de l'émetteur radio (1) intégrant :

- une itération, au moins trois fois, de l'étape de calcul d'une distance séparant la position cible d'une position de ladite pluralité de positions de sorte à avoir une première distance séparant la position cible d'une première position, une deuxième distance séparant la position cible d'une deuxième position, et une troisième distance séparant la position cible d'une troisième position;
- une estimation, par trilatération, de la position cible au moyen de la première distance, la deuxième distance et la troisième distance.

**9.** Système de radioguidage comprenant

- un émetteur radio **(1)** apte à émettre une pluralité de signaux **(11-14)** intégrant :

    o un premier signal **(11)** modulé par une première modulation;
    o un deuxième signal **(14)** modulé par une deuxième modulation différente de la première modulation;

    la modulation et/ou la puissance d'émission d'au moins un signal de ladite pluralité de signaux étant configurable à distance ;
- un équipement utilisateur **(2)** déplaçable en une pluralité de positions par rapport à l'émetteur radio **(1),** cet équipement utilisateur étant apte, à chaque position de ladite pluralité de positions, à mesurer le niveau de puissance du signal reçu relatif à chaque signal émis de ladite pluralité de signaux (11-14), **caractérisé en ce que** l'équipement utilisateur (2) est apte, à chaque position de ladite pluralité de positions:

    o à mesurer rapport signal sur bruit relatif à chaque signal émis de ladite pluralité de signaux **(11-14),** le niveau de puissance du signal reçu variant dans un premier intervalle prédéfini, le rapport signal sur bruit relatif à un signal reçu variant dans un deuxième intervalle prédéfini ;
    ∘ à normaliser, dans un même troisième intervalle prédéfini, chacun des niveaux de puissance et des rapports signal sur bruit mesurés ;
    ∘ à calculer une première valeur statistique des niveaux de puissance normalisés;
    ∘ à calculer une deuxième valeur statistique des rapports signal sur bruit normalisés;
    ∘ à calculer un indice de proximité de l'émetteur radio (1), cet indice de proximité étant égal à la somme d'une première fonction algébrique de la première valeur statistique et d'une deuxième fonction algébrique de la deuxième valeur statistique, la première fonction et la deuxième fonction étant, respectivement, pondérées par un premier coefficient de pondération non nul prédéfini et par un deuxième coefficient de pondération non nul prédéfini, la somme du premier coefficient de pondération et du deuxième coefficient de pondération étant sensiblement égale à un ;

    cet équipement utilisateur (2) étant, en outre, apte à déterminer, à une position de ladite pluralité de positions, un vecteur gradient de l'indice de proximité calculé auxdites pluralité de positions, ce vecteur gradient pointant, à partir de ladite position, vers les zones de croissance, en fonction de la distance entre l'équipement utilisateur (2) et l'émetteur radio (1), de l'indice de proximité.

**10.** Produit programme d'ordinateur implémenté sur un support mémoire, susceptible d'être mis en oeuvre au sein d'une unité de traitement informatique et comprenant des instructions pour la mise en oeuvre d'une méthode de radioguidage selon l'une des revendications 1 à 8.


**Patentansprüche**

**1.** Funkführungsverfahren zu einem Funksender (1), ausgehend von Signalen (11-14), die von diesem Funksender (1) gesendet und von einer Nutzerausrüstung (2) empfangen werden, wobei dieses Verfahren die folgenden Schritte umfasst:

- sukzessives Senden einer Vielzahl von Signalen (11-14) durch den Funksender (1) von einer Zielposition aus, umfassend:

    o ein erstes Signal (11), das durch eine erste Modulation moduliert wird, wobei dieses erste Signal (11) mit einer ersten Sendeleistung gesendet wird,
o ein zweites Signal (14), das durch eine zweite Modulation moduliert wird, die von der ersten Modulation unterschiedlich ist, wobei dieses zweite Signal (14) mit einer mit einer zweiten Sendeleistung gesendet wird;

- Versetzen der Nutzerausrüstung (2) in eine Vielzahl von Positionen in Bezug auf den Funksender (1);
- bei jeder Position der genannten Vielzahl von Positionen,

◦ Messen des Leistungsniveaus des empfangenen Signals durch die Nutzerausrüstung (2) in Bezug zu jedem gesendeten Signal der genannten Vielzahl von Signalen (11-14),

wobei das Verfahren durch die folgenden Schritte gekennzeichnet ist:
- in jeder Position der genannten Vielzahl von Positionen Messen des Verhältnisses des Nutz- und Rauschsignals relativ zu jedem von der genannten Vielzahl von Signalen (11-14) gesendeten Signal durch die Nutzerausrüstung (2), wobei das Leistungsniveau des empfangenen Signals in einem ersten vordefinierten Intervall schwankt, wobei das Verhältnis des Nutz- und Rauschsignals in Bezug zu einem empfangenen Signal in einem zweiten vordefinierten Intervall schwankt,

◦ Normalisierung jedes Leistungsniveaus und der gemessenen Verhältnisse des Nutz- und Rauschsignals in einem und demselben dritten vordefinierten Intervall;
◦ Berechnung eines ersten statistischen Wertes der normalisierten Leistungsniveaus;
◦ Berechnung eines zweiten statistischen Wertes der normalisierten Verhältnisse des Nutz- und Rauschsignals;
◦ Berechnung eines Näherungsindexes des Funksenders (1), wobei dieser Näherungsindex gleich der Summe einer ersten Algebrafunktion des ersten statistischen Wertes und einer zweiten Algebrafunktion des zweiten statistischen Wertes ist, wobei die erste Funktion und die zweite Funktion jeweils durch einen vordefinierten ersten Gewichtungskoeffizienten ungleich Null und durch einen vordefinierten zweiten Gewichtungskoeffizienten ungleich Null gewichtet werden, wobei die Summe des ersten Gewichtungskoeffizienten und des zweiten Gewichtungskoeffizienten deutlich gleich eins ist;

- Bestimmung eines Gradientenvektors des berechneten Näherungsindexes aus der genannten Vielzahl von Positionen in einer Position der genannten Vielzahl von Position, wobei dieser Gradientenvektor ausgehend von der genannten Position in Abhängigkeit von der Entfernung zwischen der Nutzerausrüstung (2) und dem Funksender (1) zu den Wachstumsbereichen des Näherungsindexes zeigt.

2. Verfahren gemäß dem voranstehenden Anspruch, umfassend darüber hinaus einen Bestimmungsschritt der Koordinaten jeder Position der genannten Vielzahl von Positionen in einem vorbestimmten Koordinatensystem.

3. Verfahren gemäß Anspruch 1 oder 2, umfassend darüber hinaus einen Bestimmungsschritt eines ersten Versetzungsvektors der Nutzerausrüstung (2), die eine erste Position und eine zweite Position der genannten Vielzahl von Positionen verbindet.

4. Verfahren gemäß dem voranstehenden Anspruch, umfassend darüber hinaus die folgenden Schritte:

- Bestimmung eines zweiten Versetzungsvektors der Nutzerausrüstung (2), der die erste Position und eine dritte Position der genannten Vielzahl von Positionen verbindet;
- Berechnung des Näherungsindexes in der ersten Position, der zweiten Position und der dritten Position.

5. Verfahren gemäß Anspruch 3 oder 4, umfassend darüber hinaus einen Anzeigeschritt des bestimmten Gradientenvektors in einer ersten Position und des bestimmten Versetzungsvektors, der diese erste Position und die zweite Position verbindet.

6. Verfahren gemäß irgendeinem der voranstehenden Ansprüche, umfassend darüber hinaus einen Berechnungsschritt der Norm des Gradientenvektors des Näherungsindexes.

7. Verfahren gemäß irgendeinem der voranstehenden Ansprüche, umfassend darüber hinaus einen Berechnungsschritt ausgehend vom Näherungsindex einer Entfernung, die die Zielposition von einer Position der genannten Vielzahl von Positionen trennt, gemäß der folgenden Formel $log_{10}(D) = \frac{1}{log_{10}(2,2*k)} * log_{10}\left(\frac{2,2*k}{i}\right)$ wobei *k* ein vordefinierter Koeffizient ist, D die zu berechnende Entfernung ist und *i* der Näherungsindex ist, der in der genannten Position der genannten Vielzahl von Positionen berechnet wird.

8. Verfahren gemäß dem voranstehenden Anspruch, umfassend darüber hinaus einen Lokalisierungsschritt des Funksenders (1), umfassend:

   - eine wenigstens dreifache Iteration des Berechnungsschritts einer Entfernung, die die Zielposition von einer Position der genannten Vielzahl von Positionen derart trennt, dass eine erste Entfernung erhalten wird, die die Zielposition von einer ersten Position trennt, wobei eine zweite Entfernung die Zielposition von einer zweiten Position trennt, und eine dritte Entfernung die Zielposition von einer dritten Position trennt;
   - eine Schätzung per Trilateration der Zielposition mittels der ersten Entfernung, der zweiten Entfernung und der dritten Entfernung.

9. Funkführungssystem, umfassend:

   - einen Funksender (1), der geeignet ist, um eine Vielzahl von Signalen (11-14) zu senden, umfassend:

     o ein erstes Signal (11), das durch eine erste Modulation moduliert wird,
     ◦ ein zweites Signal (14), das durch eine zweite, von der ersten Modulation unterschiedliche Modulation moduliert wird;

   wobei die Modulation und/oder die Sendeleistung wenigstens eines Signals der genannten Vielzahl von Signalen entfernt konfigurierbar ist;
   - eine Nutzerausrüstung (2), die in einer Vielzahl von Positionen in Bezug auf den Funksender (1) versetzbar ist, wobei diese Nutzerausrüstung geeignet ist, um in jeder Position der genannten Vielzahl von Positionen das Leistungsniveau des empfangenen Signals in Bezug auf jedes empfangene Signal zu messen, das von der genannten Vielzahl von Signalen (11-14) gesendet wird, **dadurch gekennzeichnet, dass** die Nutzerausrüstung (2) geeignet ist, um in jeder Position der genannten Vielzahl von Positionen:

     ◦ das Verhältnis des Nutz- zum Rauschsignal in Bezug auf jedes Signal zu messen, das von der genannten Vielzahl von Signalen (11-14) gesendet wird, wobei das Leistungsniveau des empfangenen Signals in einem ersten vordefinierten Intervall schwankt, wobei das Verhältnis des Nutz- zum Rauschsignal in Bezug auf ein empfangenes Signal in einem zweiten vordefinierten Intervall schwankt;
     ◦ jedes der Leistungsniveaus und der gemessenen Verhältnisse des Nutz- und Rauschsignals in einem und demselben vordefinierten dritten Intervall zu normalisieren;
     ◦ einen ersten statistischen Wert der normalisierten Leistungsniveaus zu berechnen;
     ◦ einen zweiten statistischen Wert der Verhältnisse des Nutz- zum Rauschsignal zu berechnen;
     ◦ einen Näherungsindex des Funksenders (1) zu berechnen, wobei dieser Näherungsindex gleich der Summe einer ersten Algebrafunktion des ersten statistischen Wertes und einer zweiten Algebrafunktion des zweiten statistischen Wertes ist, wobei die erste Funktion und die zweite Funktion jeweils durch einen ersten vordefinierten Gewichtungskoeffizienten ungleich Null und durch einen zweiten vordefinierten Gewichtungskoeffizienten ungleich Null gewichtet werden, wobei die Summe des ersten Gewichtungskoeffizienten und des zweiten Gewichtungskoeffizienten deutlich gleich eins ist;

   wobei diese Nutzerausrüstung (2) darüber hinaus geeignet ist, um in einer Position aus der genannten Vielzahl von Positionen einen Gradientenvektor des berechneten Näherungsindexes aus der Vielzahl von Positionen zu bestimmen, wobei dieser Gradientenvektor ausgehend von der genannten Position in Abhängigkeit von der Entfernung zwischen der Nutzerausrüstung (2) und dem Funksender (1) zu den Wachstumsbereichen des Näherungsindexes zeigt.

10. Auf einem Speicherträger implementiertes Computerprogramm-Produkt, das geeignet ist, in einer IT-Verarbeitungseinheit verarbeitet zu sein und umfassend Anweisungen für die Umsetzung eines Funkführungsverfahrens gemäß einem der Ansprüche 1 bis 8.

**Claims**

1.  Method of radio guidance to a radio transmitter (1) from signals (11-14) transmitted by this radio transmitter (1) and received by a user device (2), this method comprising the following steps:

    - successive transmitting, from a target position, by the radio transmitter (1) of a plurality of signals (11-14) integrating:

       ◦ a first signal (11) modulated by a first modulation, this first signal (11) being transmitted with a first transmission power;
       ◦ a second signal (14) modulated by a second modulation different from the first modulation, this second signal (14) being transmitted with a second transmission power;

    - displacement of the user device (2) in a plurality of positions with respect to the radio transmitter (1);
    - at each position of said plurality of positions,
    ◦ measuring, by the user device (2), the power level of the received signal relative to each signal transmitted from said plurality of signals (11-14)

    the method being **characterised by** the following steps:

    - at each position of said plurality of positions,

       ◦ measuring, by the user device (2), the signal-to-noise ratio relative to each signal transmitted from said plurality of signals (11-14), the power level of the received signal varying in a first predefined interval, the signal-to-noise ratio relative to a received signal that varies in a second predefined interval;
       ◦ normalisation in the same third predefined interval of each one of the levels of power and of the signal-to-noise ratios measured;
       ◦ calculating a first statistical value of the normalised power levels;
       ◦ calculating a second statistical value of the normalised signal-to-noise ratios;
       ◦ calculating a proximity index of the radio transmitter (1), this proximity index being equal to the sum of a first algebraic function of the first statistical value and of a second algebraic function of the second statistical value, the first function and the second function being, respectively, weighted by a first predefined non-zero weighting coefficient and by a second predefined non-zero weighting coefficient, the sum of the first weighting coefficient and of the second weighting coefficient being substantially equal to one;

    - determining, at one position of said plurality of positions, a gradient vector of the proximity index calculated at said plurality of positions, this gradient vector pointing, from said position, to the growth zones, according to the distance between the user device (2) and the radio transmitter (1), of the proximity index.

2.  Method according to the preceding claim, further comprising a step of determining coordinates, in a predefined system of coordinates, of each position of said plurality of positions.

3.  Method according to claim 1 or 2, further comprising a step of determining a first displacement vector of the user device (2) linking a first position and a second position of said plurality of positions.

4.  Method according to the preceding claim, further comprising the following steps

    - determining a second displacement vector of the user device (2) linking the first position and a third position of said plurality of positions
    - calculating the proximity index at the first position, at the second position and at the third position.

5.  Method according to claim 3 or 4, further comprising a step of displaying the gradient vector determined at a first position and of the determined displacement vector linking this first position and the second position.

6.  Method according to any preceding claim, further comprising a step of calculating the norm of the gradient vector of the proximity index.

7.  Method according to any preceding claim, further comprising a step of calculating, from the proximity index, a distance that separates the target position from a position of said plurality of positions, according to the following

formula $\log 10(D) = \frac{1}{\log 10(2.2+k)} * \log 10\left(\frac{2.2+k}{i}\right)$ where k is a predefined coefficient, D is the distance to be calculated, and i is the proximity index calculated at said position of said plurality of positions.

8. Method according to the preceding claim, further comprising a step of locating the radio transmitter (1) integrating:

   - an iteration, at least three times, of the step of calculating a distance that separates the target position from a position of said plurality of positions in such a way as to have a first distance that separates the target position from a first position, a second distance that separates the target position from a second position, and a third distance that separates the target position from a third position;
   - an estimating, by trilateration, the target position by means of the first distance, the second distance and the third distance.

9. Radio guidance system comprising

   - a radio transmitter (1) able transmit a plurality of signals (11-14) integrating:

     o a first signal (11) modulated by a first modulation;
     o a second signal (14) modulated by a second modulation different from the first modulation;

     the modulation and/or the transmission power of at least one signal of said plurality of signals able to be configured remotely;
   - a user device (2) that can be displaced in a plurality of positions with respect to the radio transmitter (1), this user device being able, at each position of said plurality of positions, to measure the power level of the received signal relative to each signal transmitted from said plurality of signals (11-14), **characterised in that** the user device (2) is able, at each position of said plurality of positions:

     o to measure the signal-to-noise ratio relative to each signal transmitted from said plurality of signals (11-14), the power level of the received signal varying in a first predefined interval, the signal-to-noise ratio relative to a received signal that varies in a second predefined interval;
     o to normalise, in the same third predefined interval, each one of the levels of power and of the signal-to-noise ratios measured;
     o to calculate a first statistical value of the normalised levels of power;
     o to calculate a second statistical value of the normalised signal-to-noise ratios;
     o to calculate a proximity index of the radio transmitter (1), this proximity index being equal to the sum of a first algebraic function of the first statistical value and of a second algebraic function of the second statistical value, the first function and the second function being, respectively, weighted by a first predefined non-zero weighting coefficient and by a second predefined non-zero weighting coefficient, the sum of the first weighting coefficient and of the second weighting coefficient being substantially equal to one;

   this user device (2) further being able to determine, at one position of said plurality of positions, a gradient vector of the proximity index calculated at said plurality of positions, this gradient vector pointing, from said position, to the growth zones, according to the distance between the user device (2) and the radio transmitter (1), of the proximity index.

10. Computer program product implemented on a memory support, able to be implemented within a computer processing unit and comprising instructions for the implementation of a radio guidance method according to one of claims 1 to 8.

FIG.1

FIG.2

FIG.3

FIG.4

FIG.5

FIG.6

FIG.7

FIG.8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3946387 A

**Littérature non-brevet citée dans la description**

- **BORENOVIC, M.N. ; NESKOVIC, A.M.** Comparative analysis of RSSI, SNR and Noise level parameters applicability for WLAN positioning purposes. *EURO-CON,* 2009